# EUROPEAN PATENT APPLICATION

(11) **EP 4 040 874 A1**
(43) Date of publication of application: **10.08.2022**
(21) Application number: 20884193.2
(22) Date of filing: 06.11.2020
(51) Int. Cl.: H04W 68/02

(54) **PAGING METHOD AND APPARATUS**

(30) Priority: 08.11.2019 CN 201911089967
(71) Applicant: Huawei Technologies Co., Ltd., Shenzhen, Guangdong 518129 (CN)
(72) Inventor: CAI, Yu, Shenzhen, Guangdong 518129 (CN); YAO, Chuting, Shenzhen, Guangdong 518129 (CN); JIN, Hui, Shenzhen, Guangdong 518129 (CN); WANG, Jian, Shenzhen, Guangdong 518129 (CN)
(74) Representative: Pfenning, Meinig & Partner mbB
(86) International application number: PCT/CN2020/127271
(87) International publication number: WO 2021/089015

(57) **Abstract**

Embodiments of this application provide a paging method and an apparatus, and relate to the communications field, to resolve a paging loss that occurs when POs of a plurality of telephone cards of a multi-card terminal device overlap in terms of time. A specific solution is as follows: A terminal device sends first indication information to a first network device in a first network, where the first indication information indicates that a first paging occasion PO needs to be updated. The terminal device receives second indication information from the first network device, where the second indication information is used by the terminal device to determine a second PO. Embodiments of this application are used in a process in which the UE monitors paging from a network side and the network side pages the UE.

## Description

This application claims priority to Chinese Patent Application No. 201911089967.0, filed with the China National Intellectual Property Administration on November 8, 2019 and entitled "PAGING METHOD AND APPARATUS", which is incorporated herein by reference in its entirety.

### TECHNICAL FIELD

This application relates to the communications field, and in particular, to a paging method and an apparatus.

### BACKGROUND

A multi-card terminal device is a terminal device on which at least two telephone cards are simultaneously installed. The multi-card terminal device may be registered with a network by using at least two telephone cards. The terminal device may be registered with different radio access technologies (radio access network, RAT) or radio access networks (radio access network, RAN) by using different telephone cards. For lower costs, some multi-card terminal devices can receive data or signaling from the RAT/RAN of only one telephone card at a time.

When the multi-card terminal device needs to receive paging on at least two RATs/RANs, if paging occasions (paging occasion, PO) on different RATs/RANs overlap in terms of time, the multi-card terminal device can monitor paging of a corresponding telephone card 1 on a PO on only one RAT/RAN. In this case, if the multi-card terminal device also needs to be paged on a RAT/RAN of a telephone card 2 whose PO overlaps the PO of the telephone card 1, a paging message sent by using the RAT/RAN of the telephone card 2 is lost, and the telephone card 2 of the multi-card terminal device cannot receive the paging message. A paging loss occurs.

### SUMMARY

Embodiments of this application provide a paging method and an apparatus, to resolve a paging loss that occurs when POs of a plurality of telephone cards of a multi-card terminal device overlap in terms of time.

To achieve the foregoing objective, the following technical solutions are used in embodiments of this application.

According to a first aspect, a paging method is provided, including: A terminal device sends first indication information to a first network device in a first network, where the first indication information indicates that a first paging occasion PO (needs to be) updated. The terminal device receives second indication information from the first network device, where the second indication information is used by the terminal device to determine a second PO. The terminal device may be UE. The first network device may be a base station, or the first network device may be an MME/AMF or the like.

Therefore, in embodiments of this application, when the terminal device determines that PO overlapping occurs on the first PO when the terminal device monitors paging from at least two networks, the terminal device may send the first indication information to the network device in the first network to negotiate a new PO, and determine the second PO based on the second indication information sent by the first network device. That is, the new PO for monitoring paging from the first network is determined, to avoid PO overlapping and prevent the terminal device from losing paging.

In a possible design, the terminal device determines the second PO based on the second indication information, and the terminal device monitors a paging message from the first network device on the second PO. Locations of the second PO and the first PO may be the same or may be different. When the locations of the second PO and the first PO are different, the first network device determines, based on a resource scheduling status in the first network, that the location of the first PO is unavailable, and therefore determines the second PO and sends the second PO to the UE. In this way, a telephone card of the UE monitors paging from the first network on the second PO, and another telephone card can continue to monitor paging from a second network on the first PO. In a possible design, before the terminal device receives the second indication information from the first network device, the method further includes: The terminal device sends a first identifier of the terminal device to the first network device. Specifically, the UE may send a UE ID of the UE to the first base station, or the UE may send the UE ID of the UE to the MME/AMF, so that the first base station or the MME/AMF can establish a correspondence between a negotiated PO and the UE ID.

In a possible design, the first identifier includes at least one of the following: an s-TMSI, an IMSI, a 5G-GUTI, or a 5G-s-TMSI.

In a possible design, the second indication information includes second offset indication information, namely, an offset of the first PO.

In a possible design, the second offset indication information indicates the offset of the first PO. That the terminal device determines the second PO based on the second indication information includes: The terminal device determines the second PO based on the first PO and the offset of the first PO. In this way, one telephone card of the UE can monitor paging on the second PO, and the other telephone card of the UE can continue to monitor paging on the first PO, to avoid a paging loss.

In a possible design, the first indication information includes first offset indication information or first offset range indication information.

In a possible design, the second indication information includes a third identifier, or the second indication information indicates the third identifier. That the terminal device determines the second PO based on the second indication information includes: The terminal device determines the second PO based on the third identifier. In a possible design, the first indication information includes a second identifier, or the first indication information indicates the second identifier. The second identifier may be a second UE ID, and the third identifier may be a third UE ID. Different UE IDs correspond to different PO locations. Therefore, a network side can send different UE IDs to the UE, to indicate an updated PO location to the UE.

In a possible design, the second offset indication information indicates an offset of the first identifier. That the terminal device determines the second PO based on the second indication information includes: The terminal device determines the second PO based on the first identifier and the offset of the first identifier. The offset of the first identifier may be considered as an offset of a first UE ID, and the offset of the first UE ID may be understood as the offset of the first PO. In this way, the UE can determine, based on the offset of the first UE ID, an updated location of the second PO indicated by the network side.

In a possible design, the method further includes: When the terminal device determines that a serving cell of the terminal device in the first network changes, the terminal device determines a third PO based on the second indication information. If the terminal device needs to receive a signal on the second network on the third PO, the terminal device sends third indication information to a second network device in the first network or a network device in the second network, where the third indication information indicates that the third PO (needs to be) updated. That is, when the serving cell of the UE changes, the UE further needs to redetermine whether PO overlapping occurs, to determine whether to negotiate a new PO with the network side.

According to a second aspect, a paging method is provided. The method includes: A first network device receives first indication information from a terminal device, where the first indication information indicates that a first paging occasion PO (needs to be) updated. The first network device sends second indication information to the terminal device, where the second indication information is used by the terminal device to determine a second PO.

In a possible design, the method further includes: The first network device sends a paging message to the terminal device on the second PO.

In a possible design, before the first network device sends the second indication information to the terminal device, the method further includes: The first network device receives a first identifier from the terminal device.

In a possible design, the first identifier includes at least one of the following: an s-TMSI, an IMSI, a 5G-GUTI, or a 5G-s-TMSI.

In a possible design, the second indication information includes second offset indication information.

In a possible design, the second offset indication information indicates an offset of the first PO. That the first network device sends a paging message to the terminal device on the second PO includes: The first network device determines the second PO based on the first PO and the offset of the first PO, to send the paging message to the terminal device on the second PO.

In a possible design, the first indication information includes first offset indication information or first offset range indication information.

In a possible design, the second indication information includes a third identifier, or the second indication information indicates the third identifier.

In a possible design, the first indication information includes a second identifier, or the first indication information indicates the second identifier.

In a possible design, the second offset indication information indicates an offset of the first identifier.

In a possible design, the method further includes: The first network device sends the second offset indication information to a second network device, where the second offset indication information indicates the second network device to send a paging message to the terminal device based on the second offset indication information, and the first network device and the second network device are access network devices in a same network.

In a possible design, the method further includes: The first network device sends at least one of the second offset indication information, the first identifier, and cell information of the terminal device to a third network device, where the first network device is an access network device, the third network device is a core network device, and the second network device and the third network device belong to a same network.

According to a third aspect, a communications apparatus is provided, and is configured to perform the method according to any one of the first aspect or the possible designs of the first aspect.

According to a fourth aspect, a communications apparatus is provided, and is configured to perform the method according to any one of the second aspect or the possible designs of the second aspect.

According to a fifth aspect, a communications apparatus is provided, including a processor. The processor is coupled to a memory. The memory is configured to store a computer program or instructions. The processor is configured to execute the computer program or the instructions stored in the memory, so that the apparatus performs the method according to any one of the first aspect or the possible designs of the first aspect.

According to a sixth aspect, a communications apparatus is provided, including a processor. The processor is coupled to a memory. The memory is configured to store a computer program or instructions. The processor is configured to execute the computer program or the instructions stored in the memory, so that the apparatus performs the method according to any one of the second aspect or the possible designs of the second aspect.

According to a seventh aspect, a readable storage medium is provided, including a program or instructions. When the program or the instructions are run by a processor, the method according to any one of the first aspect or the possible designs of the first aspect is performed.

According to an eighth aspect, a readable storage medium is provided, including a program or instructions. When the program or the instructions are run by a processor, the method according to any one of the second aspect or the possible designs of the second aspect is performed.

According to a ninth aspect, a communications system is provided, including the apparatus according to the fifth aspect and the apparatus according to the sixth aspect.

According to a tenth aspect, a communications apparatus is provided, including: a sending unit, configured to send first indication information to a first network device in a first network, where the first indication information indicates that a first paging occasion PO (needs to be) updated, and a receiving unit, configured to receive second indication information from the first network device, where the second indication information is used by the terminal device to determine a second PO.

In a possible design, the first identifier includes at least one of the following: an s-TMSI, an IMSI, a 5G-GUTI, or a 5G-s-TMSI.

In a possible design, the second indication information includes second offset indication information.

In a possible design, the second offset indication information indicates an offset of the first PO, and the apparatus may further include a processing unit, configured to determine the second PO based on the first PO and the offset of the first PO.

In a possible design, the first indication information includes first offset indication information or first offset range indication information.

In a possible design, the second indication information includes a third identifier, or the second indication information indicates the third identifier. The apparatus may further include a processing unit, configured to determine the second PO based on the third identifier.

In a possible design, the first indication information includes a second identifier, or the first indication information indicates the second identifier.

In a possible design, the second offset indication information indicates an offset of the first identifier. The processing unit is configured to determine the second PO based on the first identifier and the offset of the first identifier.

In a possible design, when the terminal device determines that a serving cell of the terminal device in the first network changes, the terminal device determines a third PO based on the second indication information. If the terminal device needs to receive a signal on a second network on the third PO, the terminal device sends third indication information to a second network device in the first network or a network device in the second network, where the third indication information indicates that the third PO (needs to be) updated.

According to an eleventh aspect, a communications apparatus is provided, including: a receiving unit, configured to receive first indication information from a terminal device, where the first indication information indicates that a first paging occasion PO (needs to be) updated; and a sending unit, configured to send second indication information to the terminal device, where the second indication information is used by the terminal device to determine a second PO.

In a possible design, the sending unit is configured to send a paging message to the terminal device on the second PO.

In a possible design, the receiving unit is configured to receive a first identifier from the terminal device.

In a possible design, the first identifier includes at least one of the following: an s-TMSI, an IMSI, a 5G-GUTI, or a 5G-s-TMSI.

In a possible design, the second indication information includes second offset indication information.

In a possible design, the second offset indication information indicates an offset of the first PO, and the sending unit is configured to determine the second PO based on the first PO and the offset of the first PO, to send the paging message to the terminal device on the second PO.

In a possible design, the first indication information includes first offset indication information or first offset range indication information.

In a possible design, the second indication information includes a third identifier, or the second indication information indicates the third identifier.

In a possible design, the first indication information includes a second identifier, or the first indication information indicates the second identifier.

In a possible design, the second offset indication information indicates an offset of the first identifier.

In a possible design, the sending unit is configured to send the second offset indication information to a second network device, where the second offset indication information indicates the second network device to send a paging message to the terminal device based on the second offset indication information, and the first network device and the second network device are access network devices in a same network.

In a possible design, the sending unit is configured to send at least one of the second offset indication information, the first identifier, and cell information of the terminal device to a third network device, where the first network device is an access network device, the third network device is a core network device, and the second network device and the third network device belong to a same network.

According to a twelfth aspect, a communications system is provided, including the communications apparatus according to the tenth aspect and the communications apparatus according to the eleventh aspect.

According to a thirteenth aspect, embodiments of this application provide an apparatus for a paging method. The apparatus is included in an electronic device, and the apparatus has a function of implementing behavior of the electronic device in any one of the foregoing aspects and the possible implementations. The function may be implemented by hardware, or may be implemented by hardware executing corresponding software. The hardware or the software includes one or more modules or units corresponding to the foregoing functions, for example, a processing module or unit, a sending module or unit, or a receiving module or unit.

According to a fourteenth aspect, embodiments of this application further provide an electronic device, including an antenna, one or more processors, and one or more memories. The one or more memories are coupled to the one or more processors. The one or more memories are configured to store computer program code, and the computer program code includes computer instructions. When the one or more processors execute the computer instructions, the electronic device is enabled to perform the paging method according to any one of the foregoing aspects and the possible implementations.

According to a fifteenth aspect, embodiments of this application provide a computer-readable storage medium, including computer instructions. When the computer instructions are run on an electronic device, the electronic device is enabled to perform the paging method according to any one of the foregoing aspects and the possible implementations.

According to a sixteenth aspect, embodiments of this application provide a computer program product. When the computer program product is run on a computer, the electronic device is enabled to perform the paging method according to any one of the foregoing aspects and the possible implementations.

According to a seventeenth aspect, embodiments of this application provide a system. The system may include the radio access device and at least one electronic device in any one of the foregoing aspects and the possible implementations. The electronic device and the radio access device may perform the paging method in any one of the foregoing aspects and the possible implementations.

According to an eighteenth aspect, a chip system is provided. The chip system is used in the electronic device in the foregoing aspects. The chip system includes one or more interface circuits and one or more processors. The interface circuit and the processor are interconnected through a line. The processor receives computer instructions from a memory of the electronic device through the interface circuit and executes the computer instructions.

### BRIEF DESCRIPTION OF DRAWINGS

FIG. 1 is a schematic diagram of a structure of a paging cycle according to an embodiment of this application;
FIG. 2 is a schematic diagram of a structure of a network architecture according to an embodiment of this application;
FIG. 3 is a schematic diagram of a structure of a network architecture according to an embodiment of this application;
FIG. 4 is a signal interaction diagram of a paging method according to an embodiment of this application;
FIG. 5 is a signal interaction diagram of a paging method according to an embodiment of this application;
FIG. 6 is a signal interaction diagram of a paging method according to an embodiment of this application;
FIG. 7A and FIG. 7B are a signal interaction diagram of a paging method according to an embodiment of this application;
FIG. 8 is a signal interaction diagram of a paging method according to an embodiment of this application;
FIG. 9 is a signal interaction diagram of a paging method according to an embodiment of this application;
FIG. 10 is a signal interaction diagram of a paging method according to an embodiment of this application;
FIG. 11 is a schematic diagram of a structure of a terminal device according to an embodiment of this application;
FIG. 12 is a schematic diagram of a structure of a terminal device according to an embodiment of this application;
FIG. 13 is a schematic diagram of a structure of a terminal device according to an embodiment of this application;
FIG. 14 is a schematic diagram of a structure of a network device according to an embodiment of this application; and
FIG. 15 is a schematic diagram of a structure of a network device according to an embodiment of this application.

### DESCRIPTION OF EMBODIMENTS

For ease of understanding, the following uses examples to describe some concepts related to embodiments of this application for reference. Details are as follows:

A multi-card terminal device is a terminal on which at least two telephone cards are simultaneously installed. The telephone card may be a subscriber identification module (subscriber identification module, SIM) card, a universal subscriber identity module (universal subscriber identity module, USIM) card, or the like. The multi-card terminal device may be registered with a network by using each of the at least two telephone cards. Different telephone cards may access different networks. The network may be a RAT, a RAN, or the like. The terminal device may be user equipment (User Equipment, UE).

Paging: When a terminal device is in radio resource control (radio resource control, RRC) idle (idle) state or RRC inactive (inactive) state, because a network may page the UE, the UE needs to monitor paging. The UE may wake up on a paging occasion (paging occasion, PO) of the UE to monitor paging downlink control information (downlink control information, DCI), and may sleep in another time to reduce power consumption of the UE.

PO: POs of UE may be cyclical, and a possible cycle is 32, 64, 128, or 256 radio frames. The POs may be determined based on a parameter broadcast by a cell and an identifier (identification, ID) of the UE. For example, the parameter broadcast by the cell includes a discontinuous reception (discontinuous reception, DRX) cycle (cycle), a paging cycle (paging cycle), and a default paging cycle (default paging cycle). The UE ID may be an international mobile subscriber identity (international mobile subscriber identification number, IMSI) or a 5G-s-temporary mobile subscriber identify (5G S-Temporary Mobile Subscription Identifier, 5G-s-TMSI). Further, the PO may be determined based on the UE ID, for example, UE ID=IMSI mod 1024, or UE ID=5G-s-TMSI mod 1024.

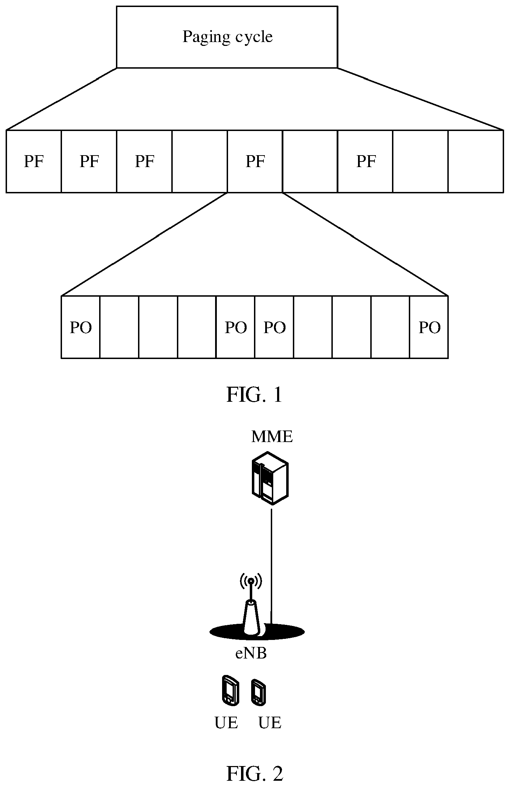

The PO described in embodiments of this application indicates a moment (for example, in a unit of a slot or a symbol) for sending a paging message in time domain. Sending paging may be understood as sending control information or scheduling information of a paging message, or sending a paging message. Monitoring paging may be understood as monitoring control information or scheduling information of a paging message, or monitoring a paging message. Therefore, the PO may alternatively be understood as information about a time domain location in which a network device sends the scheduling information. In idle state, the UE needs to cyclically receive a paging message, and this cycle is a paging cycle (T, which may alternatively be considered as a DRX cycle in idle state). However, a specific location of a paging occasion (PO) in time domain is determined by the network device and the terminal device based on a protocol. The PO may alternatively be understood as one scheduling subframe, corresponding to one subframe number, and may be 1 ms in the Long Term Evolution (Long Term Evolution, LTE). As shown in FIG. 1, in one paging cycle, there may be paging frames (paging frame, PF) corresponding to a plurality of radio frame numbers. There may be a plurality of POs (corresponding to a plurality of terminal devices, and each terminal device has only one PO in one paging cycle) in each paging frame. In an existing standard protocol, both a paging message for paging the UE and a message of a short message service message type are sent on the PO. When a specific PO currently arrives, if the paging message for paging the UE and the message of the short message service message type arrive separately, the network device sends the corresponding paging message or short message service message; or when the two messages arrive simultaneously, the network device simultaneously sends the two messages.

Paging message: Usually, paging messages are classified into two types. One type is used for calling a terminal device. To be specific, a network device searches for the terminal device, to enable the terminal device to perform a random access process after receiving the paging message, and enter a connected state from an idle state to perform data communication. For example, during a telephone call service, the network device sends a paging message to the terminal device. The other type is used for short message service message transmission. For example, short message service messages can be transmitted by an earthquake and tsunami warning system (earthquake and tsunami warning system, ETWS) and a system information system to the terminal device.

An access and mobility management function (access and mobility management function, AMF) is a termination point of a RAN signaling interface (N2) and a termination point of network attached storage (network attached storage, NAS) (N1) signaling, is mainly responsible for encryption and integrity protection of a NAS message, and has functions such as registration management, access management, mobility management, authentication management, transparent transmission of short message service messages, and context management. In addition, when interacting with an evolved packet system (evolved packet system, EPS) network, the AMF is further responsible for allocating an ID of an EPS bearer, and the like.

A mobility management entity (Mobility Management Entity, MME) has main functions: supporting access stratum (access stratum, AS) signaling and security of the signaling; sending a paging message to a related base station; security control (authentication, signaling integrity protection, and data encryption); reachability of UE in idle state (including control and execution of a paging retransmission message); tracking area (tracking area, TA) list management (UEs in idle state and active state); MME selection when the MME changes during handover; mobility control in idle state; bearer management, including dedicated bearer setup; encryption and integrity protection of non-access stratum signaling; and the like.

The following describes the technical solutions of this application with reference to the accompanying drawings.

The technical solutions in embodiments of this application may be used in various communications systems such as a Long Term Evolution (long term evolution, LTE) system, a worldwide interoperability for microwave access (worldwide interoperability for microwave access, WiMAX) communications system, a 5th generation (5th Generation, 5G) system, for example, a new radio (new radio access technology, NR) system, a network that integrates a plurality of systems, an internet of things system, an internet of vehicles system, and a future communications system such as a 6G system.

All aspects, embodiments, or features are presented in this application by describing a system that may include a plurality of devices, components, modules, and the like. It should be understood that, each system may include another device, component, module, and the like, and/or may not include all devices, components, modules, and the like discussed with reference to the accompanying drawings. In addition, a combination of these solutions may also be used.

In addition, the term "example" in embodiments of this application is used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, "of (of)", "corresponding (corresponding, relevant)", and "corresponding (corresponding)" may be interchangeably used sometimes. It should be noted that meanings expressed by the terms are consistent when differences are not emphasized.

Network architectures and service scenarios described in embodiments of this application are intended to describe the technical solutions in embodiments of this application more clearly, and do not constitute a limitation on the technical solutions provided in embodiments of this application. A person of ordinary skill in the art may learn that, with evolution of the network architectures and emergence of new service scenarios, the technical solutions provided in embodiments of this application are also applicable to similar technical problems.

Embodiments of this application may be used in a conventional typical network or a future UE-centric (UE-centric) network. A non-cell (Non-cell) network architecture is introduced to the UE-centric network. To be specific, a large quantity of small cells are deployed in a specific area to form a hyper cell (Hyper cell). Each small cell is a transmission point (Transmission Point, TP) or a real time transport protocol (real time transport protocol, TRP) of the hyper cell, and is connected to a centralized controller (controller). When the UE moves in the hyper cell, a network side device selects a new sub-cluster (sub-cluster) for the UE in real time to serve the UE, to avoid real cell handover, and implement UE service continuity. The network side device includes a wireless network device.

In embodiments of this application, an NR network scenario or an LTE network scenario in a wireless communications network is used as an example to describe some scenarios. It should be noted that the solutions in embodiments of this application may be further used in another wireless communications network, and a corresponding name may also be replaced with a name of a corresponding function in the another wireless communications network.

The network device in embodiments of this application may be a device having a wireless transceiver function or a chip that can be disposed in the device, and may be deployed in a radio access network to provide a wireless communications service for the terminal device. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP), a wireless relay node, a wireless backhaul node, a transmission point (transmission and reception point, TRP, or transmission point, TP), or the like in a wireless fidelity (wireless fidelity, Wi-Fi) system. Alternatively, the device may be a gNB or a transmission point (TRP or TP) in a 5G system such as an NR system, or one antenna panel or a group (including a plurality of antenna panels) of antenna panels of a base station in a 5G system, or a network node such as a baseband unit (BBU) or a distributed unit (DU, distributed unit) that constitutes a gNB or a transmission point, or a vehicle-mounted device, a wearable device, a network device in a future evolved PLMN network, or the like.

In some deployments, the gNB may include a centralized unit (centralized unit, CU) and a DU. The gNB may further include a radio unit (radio unit, RU). A plurality of DUs may be all controlled by one CU. The CU implements some functions of the gNB, and the DU implements some functions of the gNB. It may be understood that the network device may be a CU node, a DU node, or a device including the CU node and the DU node. In addition, the CU may be classified as a network device in a radio access network RAN, or the CU may be classified as a network device in a core network CN. This is not limited herein.

Alternatively, the CU may be divided into a CU-control plane (centralized unit-control plane, CU-CP) and a CU-user plane (centralized unit-user plane CU-UP). The CU-CP is responsible for a control plane function, and mainly includes a control plane of an RRC layer and a control plane of a packet data convergence protocol (packet data convergence protocol, PDCP) layer. The CU-UP is responsible for a user plane function, and mainly includes a user plane of a service data adaptation protocol (service data adaptation protocol, SDAP) layer and a user plane of a PDCP layer. The CU-CP and the CU-UP are connected through an interface (for example, an El interface). The CU-CP is connected to the core network through an interface (for example, an Ng interface), and is connected to the DU through an interface (for example, F1-C (control plane interface)). The CU-UP is connected to the DU through an interface (for example, F1-U (user plane interface)).

A terminal device in embodiments of this application may be referred to as UE, an access terminal, a subscriber unit, a subscriber station, a mobile station, a mobile console, a remote station, a remote terminal, a mobile device, a user terminal, a terminal, a wireless communications device, a user agent, or a user apparatus. The terminal device in embodiments of this application may be a mobile phone (mobile phone), a tablet computer (Pad), a computer with a wireless transceiver function, a virtual reality (Virtual Reality, VR) terminal device, an augmented reality (Augmented Reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a 5G network, a terminal device in a future evolved public land mobile network (public land mobile network, PLMN), or the like. Application scenarios are not limited in embodiments of this application. In this application, the methods and the steps that are implemented by the terminal device may also be implemented by a means (for example, a chip or a circuit) that may be used in the terminal device. In this application, the foregoing terminal device and the means (for example, the chip or the circuit) that may be disposed in the foregoing terminal device are collectively referred to as a terminal device.

In embodiments of this application, the terminal device or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more computer operating systems that implement service processing through a process (process), for example, a Linux operating system, a Unix operating system, an Android operating system, an iOS operating system, or a Windows operating system. The application layer includes applications such as a browser, a contact list, word processing software, and instant messaging software. In addition, a specific structure of an execution body of a method provided in embodiments of this application is not specifically limited in embodiments of this application, provided that a program that records code of the method provided in embodiments of this application can be run to perform communication according to the method provided in embodiments of this application. For example, the method provided in embodiments of this application may be performed by the terminal device or the network device, or a function module that is in the terminal device or the network device and that can invoke and execute the program.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, a computer-readable medium may include but is not limited to a magnetic storage component (for example, a hard disk drive, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a radio channel, and various other media that can store, include, and/or carry instructions and/or data.

Embodiments of this application may be used in an application scenario in which when a multi-card terminal device monitors paging, if POs of different networks overlap, how to prevent UE from losing paging.

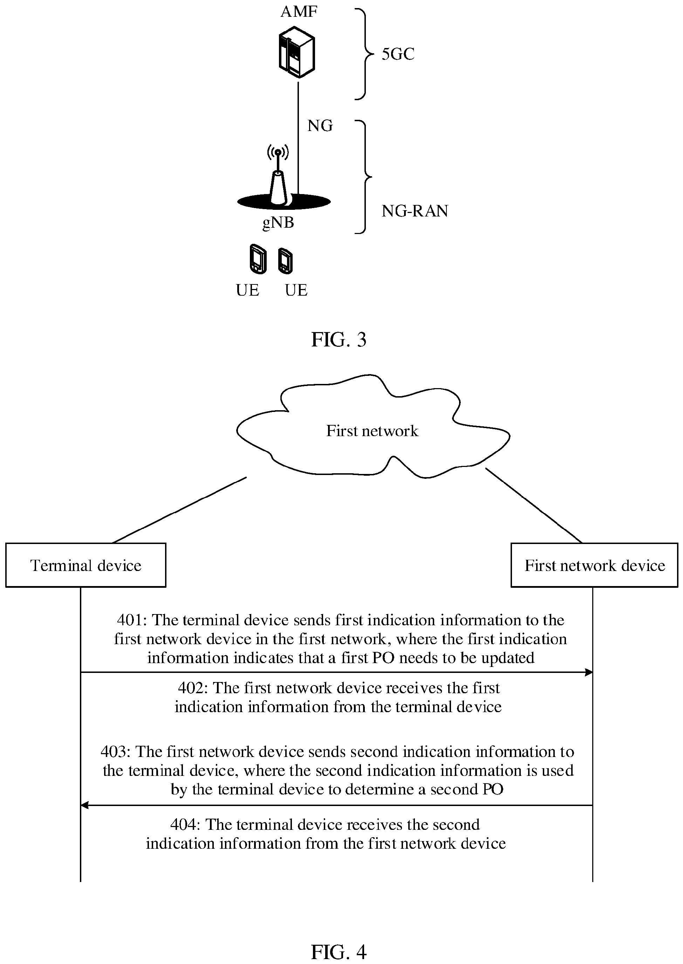

A network architecture in this application may include a terminal device, an access network device, and a core network device. As shown in FIG. 2, the terminal device is UE, the access network device may be an evolved NodeB (evolved NodeB, eNB) in an LTE system, and the core network device may be an MME in the LTE system. Alternatively, as shown in FIG. 3, the terminal device is UE, the access network device may be a gNB (also referred to as an NG-ENB) in an NG radio access network (NG-radio access network, NG-RAN) in a 5G system, and the core network device may be an AMF in a 5th generation core network (5 generation core, 5GC) in the 5G system. Main functions of the MME and the AMF have been described above.

This application is used in the foregoing network architecture, and proposes a paging method to prevent a terminal device from losing paging. A basic principle of the paging method may be as follows: The terminal device may coordinate a paging parameter with a network-side network device, and the network-side network device and the terminal device may determine a PO based on the coordinated paging parameter, to avoid a paging loss.

Based on the foregoing principles, the following describes the method embodiments of this application.

### Embodiment 1

An embodiment of this application provides a paging method. As shown in FIG. 4, the method includes the following steps.

401: A terminal device sends first indication information to a first network device in a first network. The first indication information indicates that a first PO (needs to be) updated.

The terminal device may be a multi-card terminal device, or may be referred to as multi-card UE. The first network may be a RAN, a RAT, a core network (Core Network, CN), an evolved packet core (Evolved Package Core, EPC), a 5GC, an EPS (Evolved Packet System), or a 5G system (5GS), and may be for example, an LTE network or a 5G network. The first network device may be an access network device in LTE/5G, for example, may be a base station (eNB or gNB). Alternatively, the first network device may be a core network device in LTE/5G, for example, may be an MME/AMF.

In some embodiments, the terminal device may negotiate a PO with an access network device, or may negotiate a PO with a core network device.

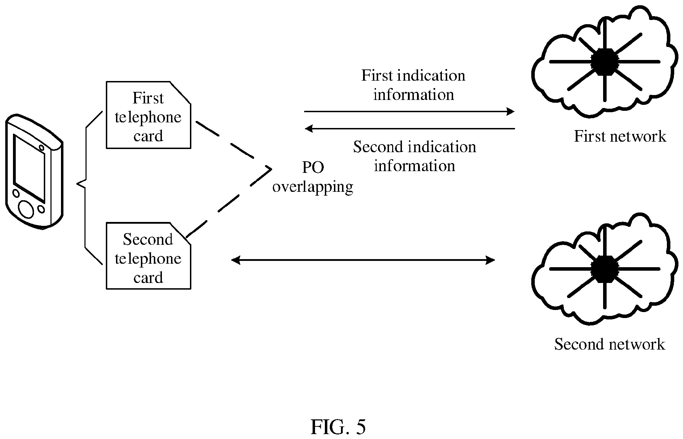

In some embodiments, as shown in FIG. 5, when the terminal device determines that a plurality of installed telephone cards (a plurality of SIM cards or a plurality of USIM cards) are to monitor paging from both the first network and a second network, to be specific, when a first telephone card is to monitor paging from the first network and a second telephone card is to monitor paging from the second network, PO (denoted as the first PO) overlapping occurs. The terminal device may send, by using one of the telephone cards, for example, the first telephone card, the first indication information to a network with which the telephone card is registered, for example, the first network. The first indication information indicates that the first PO (needs to be) updated, and the first PO is a PO on which the terminal device monitors a paging message from the first network.

It should be noted that, that a telephone card monitors paging from a network may be understood as: The terminal device monitors paging on a network accessed by the telephone card or a network with which the telephone card is registered.

In some embodiments, the first indication information may further indicate that a new PO (needs to be) determined, or indicate that paging occasion overlapping occurs, or indicate that the terminal device may undergo paging occasion overlapping, or indicate that a paging loss may occur, or indicate that the UE needs to receive a signal on another network on a paging occasion, or indicate that the UE needs to simultaneously receive signals on at least two networks, or indicate that the UE is a single-receiver terminal, or indicate that a receiving capability of the UE is limited, or indicate that a communications capability of the UE is limited, or indicate that the UE is a multi-card terminal.

It should be noted that, in this embodiment of this application, the plurality of telephone cards may belong to a same operator, or may belong to different operators. Access network devices or core network devices on networks with which the plurality of telephone cards are registered may be the same or may be different.

It should be noted that, in this embodiment of this application, PO overlapping may mean that in two networks, one PO of a telephone card overlaps one PO of another telephone card, or each PO of a telephone card overlaps each PO of another telephone card, or POs of a telephone card cyclically overlap POs of another telephone card, or PO overlapping in another case. This is not limited in this application.

In some embodiments, before the terminal device sends the first indication information to the first network device in the first network, the terminal device determines that the terminal device may lose paging (a paging loss may be understood as: the terminal device does not receive paging sent by the network to the terminal device); or the terminal device determines that the terminal device needs to receive a signal on another network on the first PO. For example, the terminal device determines that the terminal device needs to monitor paging on another network on the first PO, the terminal device determines that the terminal device needs to perform measurement on the another network on the first PO, or the terminal device determines that the terminal device needs to receive system information on the another network on the first PO.

In some embodiments, the terminal device may determine the first PO based on a parameter broadcast by a serving cell in the first network and a UE ID.

402: The first network device receives the first indication information from the terminal device.

403: The first network device sends second indication information to the terminal device. The second indication information is used by the terminal device to determine a second PO.

When the first network device receives the first indication information, the first network device knows that a new PO needs to be negotiated for paging the terminal device. Therefore, the first network device may determine, based on time-frequency resource occupation in the first network, a parameter indicating the second PO, and send, to the terminal device by using the second indication information, the parameter indicating the second PO.

404: The terminal device receives the second indication information from the first network device.

In this way, the terminal device may determine, based on the second indication information, the second PO for monitoring paging from the first network, to monitor a paging message from the first network on the determined second PO. In other words, the first telephone card monitors paging based on the second PO, so that the second PO and the first PO on which the second telephone card monitors paging are staggered in time domain.

It should be noted that the first indication information and/or the second indication information in this embodiment of this application may be carried in an RRC message or a MAC CE message, or may be carried in another type of message. This is not limited in this application.

Therefore, in this embodiment of this application, when the terminal device determines that PO overlapping occurs on the first PO when the terminal device monitors paging from at least two networks, the terminal device may send the first indication information to the network device in the first network to negotiate a new PO, and determine the second PO based on the second indication information sent by the first network device. That is, the new PO for monitoring paging from the first network is determined, to avoid PO overlapping and prevent the terminal device from losing paging.

### Embodiment 2

The following describes an embodiment by using an example in which a terminal device is UE and a first network device is an access network device.

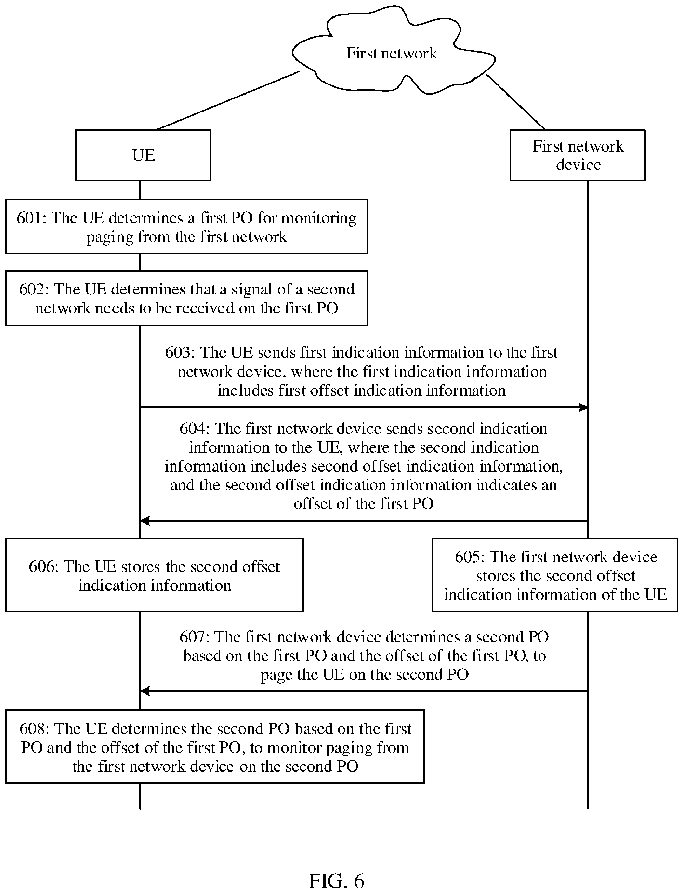

An embodiment of this application provides a paging method. As shown in FIG. 6, the method includes the following steps.

601: The UE determines a first PO for monitoring paging from a first network.

The UE may determine, based on a parameter broadcast by a cell in which the UE is located in the first network and a UE ID, the first PO for monitoring paging from the first network. The determining method may be a PO calculation method in an existing standard protocol. Details are not described in this application.

602: The UE determines that a signal of a second network needs to be received on the first PO.

In some embodiments, the UE determines that when registration of a first telephone card in the first network is completed, a PO on which the first telephone card monitors paging on the first network is the first PO. When a second telephone card of the UE is in a registration process in a second network or registration of the second telephone card is completed, the UE determines that a PO on which the second telephone card monitors paging on the second network is also the first PO. That is, the UE determines that a signal of the second network needs to be received on the first PO. The UE determines that PO overlapping occurs, and the UE needs to simultaneously monitor paging messages on different networks. However, a multi-card terminal device can receive a paging message on only one network at a time, and a paging loss may be caused.

In some embodiments, when a moment at which the UE monitors paging on the first network is the same as a moment at which the UE monitors paging on the second network, the UE determines to simultaneously receive paging messages on the different networks.

In some embodiments, when a moment at which the UE monitors paging from the first network is the same as a moment at which the UE performs measurement (for example, measures a reference signal on the second network) on the second network, the UE determines to simultaneously perform receiving on the different networks.

In some embodiments, when a moment at which the UE monitors paging on the first network is the same as a moment at which the UE receives system information on the second network, the UE determines to simultaneously perform receiving on the different networks.

The first network and the second network each may be a RAN, a RAT, or the like.

603: The UE sends first indication information to the first network device. The first indication information includes first offset indication information.

It may be understood that, that the first indication information includes the first offset indication information means that the first indication information indicates that the first PO (needs to be) updated.

In some embodiments, the first network device may be a first base station, and the first base station is an eNB, a gNB, or the like. In this embodiment of this application, the first base station is a network device in the first network. The UE may select any one of two networks on which the UE simultaneously receives paging messages in different networks as the first network. Alternatively, for example, the UE receives a paging message from both the first base station and a second base station. The first base station is a network device in the first network, the second base station is a network device in the second network. The UE sends the first indication information to either the first base station or the second base station.

Therefore, in some embodiments, before step 603, the method may further include: The UE determines the first network device. The first network device is a network device in one network in different networks on which the UE simultaneously monitors paging.

In some embodiments, the UE sends the first indication information to the first base station, to indicate, to the first base station, that a paging loss that occurs or may occur on the UE needs to be processed, or indicate, to the first base station, that a situation in step 602 that occurs or may occur on the UE needs to be processed. Therefore, step 603 may be understood as follows: The UE indicates, to the first base station, that PO overlapping occurs; or the UE only indicates, to the first base station, that the UE may undergo PO overlapping; or the UE indicates, to the first base station, that the UE is a single-receiver multi-card terminal device, that is, the multi-card terminal device can receive data or signaling from a network of only one telephone card at a time; or the UE indicates, to the first base station, that a receiving capability of the UE is limited; or the UE indicates, to the first base station, that a communications capability of the UE is limited; or the UE indicates, to the first base station, that the UE is a multi-card terminal device.

In some embodiments, the UE may determine the first offset indication information based on a PO on which PO overlapping occurs. The first offset indication information indicates a value of a first offset.

In some embodiments, indication information used by the UE to indicate that the first PO (needs to be) updated and indication information used by the UE to indicate the first offset indication information may be separately sent. For example, the UE first indicates, to the first base station, that the first PO (needs to be) updated, and then indicates the first offset indication information to the first base station.

A unit of the first offset may be one of the following units:
a frame (frame), a subframe (subframe), a slot (slot), a paging cycle (paging cycle), a DRX cycle (DRX cycle), a fraction of the paging cycle (DRX cycle), a multiple of the paging cycle (DRX cycle), a cell PO interval, a fraction of the cell PO interval, or a multiple of the cell PO interval. The paging cycle (DRX cycle) may be a paging cycle (DRX cycle) broadcast by a cell, a default cycle, or a default paging cycle. The paging cycle (DRX cycle) may be a cycle of POs of the UE.

The cell PO interval may be determined based on a parameter that is broadcast by a cell and that is used to calculate a paging occasion. For example, the cell PO interval may be T/N. T is the paging cycle (DRX cycle) broadcast by a cell, the default cycle, or the default paging cycle, and N is the parameter broadcast by a cell. N may alternatively be determined by the parameter broadcast by a cell. For example, N=min(T, nB), where nB is the parameter broadcast by a cell.

Alternatively, a first offset indication may be replaced with a first offset range indication. The first offset range indication indicates a value of a first offset range. The first offset range may be a range of offsets that prevent the UE from undergoing PO overlapping, or the first offset range may be a range of offsets that enable the UE to undergo paging occasion overlapping.

In some embodiments, the UE may further send a first identifier of the UE to the first network device. The first identifier is denoted as a first UE ID. The first UE ID may include at least one of the following: an s-TMSI, an IMSI, a 5G globally unique temporary UE identity (Globally Unique Temporary UE Identity, 5G-GUTI), or a 5G-s-TMSI.

604: The first network device sends second indication information to the UE. The second indication information includes second offset indication information, and the second offset indication information indicates an offset of the first PO.

The second offset indication information may indicate a value of a second offset. For a unit of the second offset, refer to the description of the unit of the first offset. The value of the second offset may be the same as or different from the value of the first offset.

In some embodiments, the first base station may determine the second offset based on time-frequency resource scheduling statuses of uplink and downlink data of a plurality of UEs by the first base station. When the value of the first offset is different from the value of the second offset, in a possible case, the first base station has allocated a time domain resource on a PO determined by adding the first PO and the value of the first offset to specific UE. Therefore, the first base station determines that the value of the first offset indicated by the UE is unavailable, and the UE determines the value of the second offset. Similarly, when the value of the first offset is the same as the value of the second offset, the first base station determines that the value of the first offset indicated by the UE is available.

It should be noted that, in this embodiment of this application, the value of the first offset and the value of the second offset may be positive values, or may be negative values.

605: The first network device stores the second offset indication information of the UE.

When the UE is in RRC_idle state, RRC_inactive state, or RRC_connected state, the first base station stores the value of the second offset of the UE.

In some embodiments, the first base station may further store the first UE ID received from the UE. To be specific, when the UE is in RRC_idle state, RRC_inactive state, or RRC_connected state, the first base station stores the first UE ID. Because the first base station may need to store values of second offsets of a plurality of UEs, the first base station needs to store a value of a second offset and a first UE ID of each UE. In other words, the first base station needs to establish a correspondence between the first UE ID and the value of the second offset.

606: The UE stores the second offset indication information.

In some embodiments, the UE stores the value of the second offset that is indicated by the second offset indication information. The value of the second offset corresponds to an identifier of the first telephone card, the first network, and an identifier of the first base station.

607: The first network device determines a second PO based on the first PO and the offset of the first PO, to page the UE on the second PO.

In some embodiments, paging the UE may mean that the first base station sends, to the UE on the second PO, signaling used to schedule a paging message of the UE; or paging the UE may mean that the first base station sends a paging message of the UE to the UE on the second PO.

In some embodiments, the first base station may page the UE on the second PO that is determined by adding the first PO in a first cell and the offset of the first PO. The first cell is a cell of the first base station accessed by the UE when the UE performs step 602 and step 603. Each cell corresponds to a different PO.

In some embodiments, because the UE is in idle state, and the first base station does not know a specific cell in which the UE is located, the first base station may page the UE in all cells. Therefore, the method may further include: The first base station pages the UE on a PO in a second cell. The second cell is a cell corresponding to the first base station, and is not a cell of the first base station accessed by the UE when the UE performs step 602 and step 603. The PO in the second cell is determined based on a parameter broadcast by the second cell and the first UE ID. In some embodiments, the first base station may page the UE on a PO determined by adding the PO in the second cell and the offset of the first PO.

608: The UE determines the second PO based on the first PO and the offset of the first PO, to monitor paging from the first network device on the second PO.

In some embodiments, the UE may add the first PO and the offset of the first PO, to determine the second PO.

In some embodiments, monitoring paging from the first network device may be monitoring signaling that is used to schedule a paging message of the UE and that is from the first network device, or monitoring paging from the first network device may be monitoring a paging message of the UE from the first network device.

In this way, when determining to simultaneously receive paging messages on different networks, the UE may negotiate with a base station on one of the networks to determine a PO, to avoid simultaneously receiving paging messages on different networks.

In some embodiments, the following Case A and Case B may further exist:

Case A: A serving cell of the UE in the first network may change. Because the cell change means a PO change, the UE needs to determine whether PO overlapping occurs on a third PO in a new cell that the UE camps on. The third PO is determined based on a parameter broadcast by the new cell that the UE camps on and the first UE ID. Therefore, after step 606, step 607 and step 608 may be replaced with:

607a (not shown in the figure): When the UE determines that the serving cell of the UE in the first network changes, the UE determines whether to simultaneously receive paging messages from different networks on the third PO calculated in the changed serving cell. In other words, it is determined whether PO overlapping occurs on the third PO.

608a (not shown in the figure): If the UE determines to simultaneously receive paging messages from the different networks on the third PO, the UE sends third indication information to the first network device or the second network device. The third indication information indicates that the third PO (needs to be) updated. For an update process, refer to the update process of the first PO.

In other words, the value of the second offset that is indicated by the second offset indication information and that is previously obtained by the UE is not used, and the UE needs to negotiate a new PO. The negotiation may be negotiation with the first network device with which the UE negotiates last time, or may be negotiation with the second network device or the second base station in the second network.

It may be understood that if the UE determines not to simultaneously receive paging messages from the different networks on the third PO, the UE does not perform processing, and continues to monitor paging from the first network on the third PO.

Case B: In some embodiments, a serving cell of the UE in the second network may change, and the second network is a network on which a PO overlaps with that on the first network. In this case, step 607 and step 608 may be replaced with:

607b (not shown in the figure): When the UE determines that a serving cell of the UE in the second network changes, the UE determines whether to simultaneously receive paging messages from the different networks on a fourth PO. The fourth PO is determined based on a parameter broadcast by a new cell that the UE camps on in the second network and the first UE ID.

608b (not shown in the figure): If the UE determines to simultaneously receive paging messages from the different networks on the fourth PO, the UE sends fourth indication information to the first network device or the second network device. The fourth indication information indicates that the fourth PO (needs to be) updated. For an update process, refer to the update process of the first PO.

It may be understood that if the UE determines not to simultaneously receive paging messages from the different networks on the fourth PO, the UE does not perform processing, and continues to monitor paging from the second network on the fourth PO.

An effect of the renegotiation is similar to that of the foregoing technical effect, and both can prevent the UE from losing paging.

### Embodiment 3

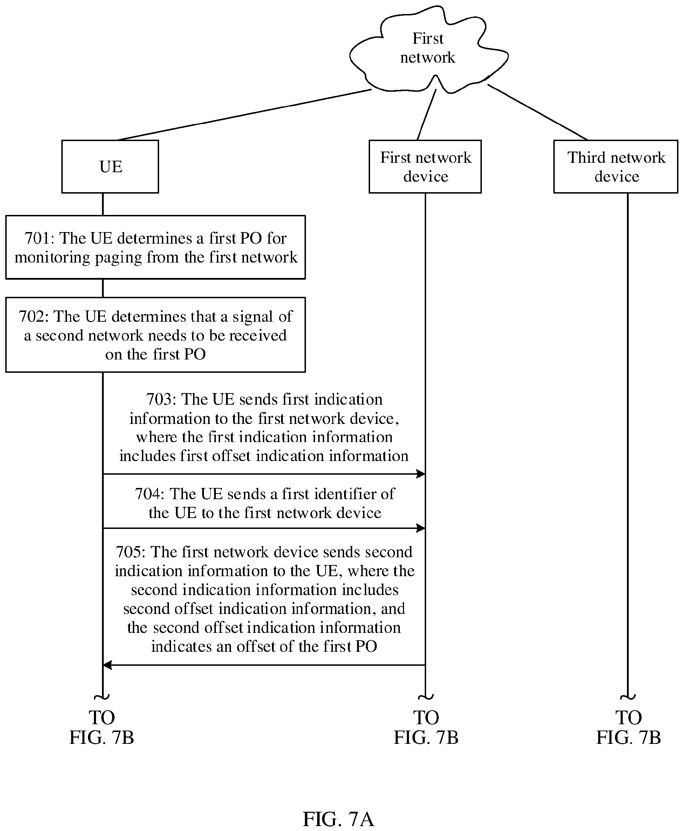

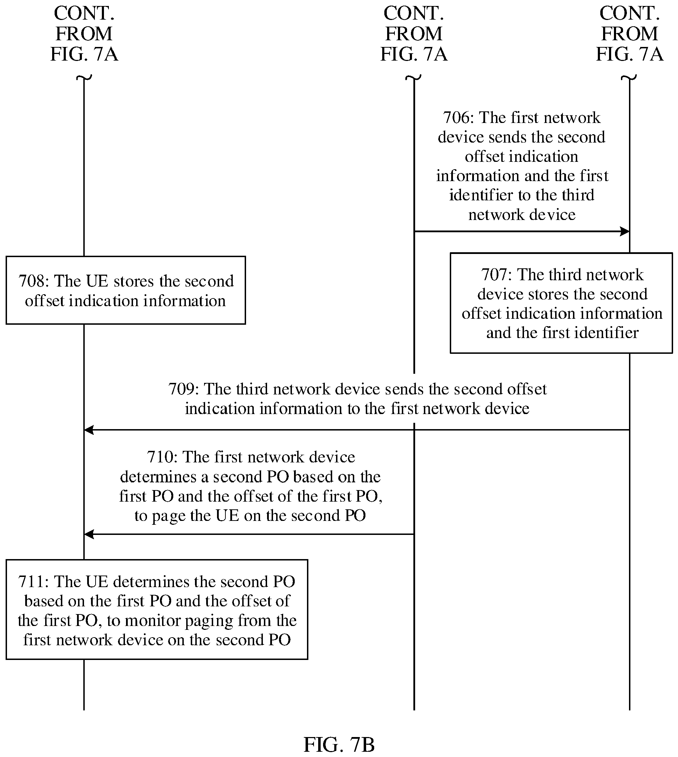

Embodiments of this application further provide a paging method. As shown in FIG. 7A and FIG. 7B, the method includes the following steps.

701: UE determines a first PO for monitoring paging from a first network.

For implementation of step 701, refer to step 601.

702: The UE determines that a signal of a second network needs to be received on the first PO.

For implementation of step 702, refer to step 602.

703: The UE sends first indication information to a first network device. The first indication information includes first offset indication information.

For implementation of step 703, refer to step 603.

704: The UE sends a first identifier of the UE to the first network device.

In some embodiments, the first identifier may be a first UE ID. For a description of the first identifier, refer to the description in step 603.

In some embodiments, both the first identifier and the first indication information may be carried in one message for sending, or the first identifier may be carried in the first indication information for sending.

705: The first network device sends second indication information to the UE. The second indication information includes second offset indication information, and the second offset indication information indicates an offset of the first PO.

For implementation of step 705, refer to step 604.

706: The first network device sends the second offset indication information and the first identifier to a third network device.

In some embodiments, the first network device may be a first base station in an access network, and the third network device may be an MME or an AMF in a core network. The second offset indication information indicates a value of a second offset.

In some embodiments, the first base station sends a UE capability information indication (UE capability info indication) to the first MME/AMF. The UE capability information indication indicates the second offset, or the UE capability information indication includes the second offset. For example, a UE radio capability for paging information element (Information Element, IE) (UE radio capability for paging IE) in the UE capability information indication indicates the second offset.

In some embodiments, the first base station may further indicate cell information of a cell to the first MME/AMF. The cell is a cell that the UE camps on, or the cell is a cell accessed by the UE when the UE sends the first indication information to the first network device. The cell information may be a cell ID.

707: The third network device stores the second offset indication information and the first identifier.

In some embodiments, the third network device may further store the cell information in step 706.

In step 706, when the first network device is the first base station, the first base station sends the second offset indication information and the first identifier to the third network device because if the UE is in connected state (RRC_idle), the first base station does not store any information about the UE, and if the first base station needs to store the second offset indication information and the first identifier, an implementation architecture of the first base station is greatly affected. A function of the third network device MME/AMF in the core network includes storing context information of the UE. Therefore, it is easy for the third network device to store the second offset indication information and the first identifier.

In some embodiments, if the first base station determines that the UE is in inactive state (RRC_inactive) or connected state (RRC_connected), the first base station may store the second offset indication information and the first identifier.

708: The UE stores the second offset indication information.

709: The third network device sends the second offset indication information to the first network device.

For example, when the network needs to page the UE, the MME/AMF in the core network sends a first paging message to the first base station in the access network. The first paging message may indicate the second offset indication information. In a possible implementation, the first paging message may include a UE radio capability for paging IE, and the UE radio capability for paging IE indicates the second offset indication information.

In some embodiments, the MME/AMF may further indicate cell information of the UE to the first network device (the first base station).

In some embodiments, the MME/AMF may further indicate the second offset indication information to a second network device (a second base station). For example, the second offset indication information may be indicated in a second paging message. That is, the second paging message is sent by the MME/AMF to the second base station, and indicates to page UE served by the second base station. For example, the second paging message includes a UE radio capability for paging IE, and the UE radio capability for paging IE indicates the second offset indication information. The second base station is a base station that is in a same network as the first base station.

Because the network does not know a cell that the UE camps on, in one case, the MME/AMF may send the second offset indication information to all base stations that are in the first network and that belong to a same area range as the first base station. In another case, the MME/AMF sends the second offset indication information only to the first base station with which the MME/AMF negotiates. If the AMF sends the second offset indication information to a plurality of base stations that are in the first network and that belong to the same area range as the first base station, the plurality of base stations page the UE, and one of the base stations pages the UE based on the second offset indication information.

710: The first network device determines a second PO based on the first PO and the offset of the first PO, to page the UE on the second PO.

For implementation of this step, refer to 607. Details are not described herein again.

A difference lies in that in some embodiments, the first network device (the first base station) may further indicate the second offset to the second network device (the second base station). The second base station is a base station that is in a same network as the first base station.

For example, the first base station may send a third paging message to the second base station. The third paging message indicates the second offset indication information, the third paging message indicates to page the UE, and the second offset indication information indicates the second base station to send a paging message to the UE based on the second offset indication information. In this way, the second base station may page the UE on a PO based on the second offset indicated by the second offset indication information. The PO is determined based on a parameter broadcast by a cell corresponding to the second base station and the first UE ID.

This is because if the UE performs cell reselection, the UE may not know whether a reselected cell is served by the first base station. Therefore, after the cell reselection, whether PO overlapping occurs after offset also needs to be considered. If whether PO overlapping occurs after offset is not considered, a base station after the UE performs the cell reselection may use the second offset indication information, and the UE does not use the second offset indication information. POs of the base station and the UE after the cell reselection do not correspond.

711: The UE determines the second PO based on the first PO and the offset of the first PO, to monitor paging from the first network device on the second PO.

For implementation of this step, refer to 608. Details are not described herein again.

In this embodiment, Case A and Case B in the foregoing embodiment may also exist.

In addition, the following Case C and Case D may further exist:

Case C: It is further described in step 709 that the MME/AMF in the first network may further indicate the second offset indication information to the second base station. In this way, in some embodiments, if the MME/AMF indicates the second offset to another base station (for example, the second base station), and the another base station uses the second offset indication information when sending paging to the UE, when a cell that the UE camps on in the first network changes, the UE also redetermines whether PO overlapping occurs.

In one case, when a serving cell of the first network changes, if the UE determines, in the changed serving cell, that PO overlapping does not occur on a PO determined by adding a PO for monitoring paging and the value of the second offset indicated by the second offset indication information, the UE does not perform processing. That is, the UE continues to monitor paging on the PO for monitoring paging in the changed serving cell.

In another case, if the UE determines, in the changed serving cell, that PO overlapping occurs on a PO determined by adding the PO for monitoring paging and the value of the second offset indicated by the second offset indication information, the UE needs to coordinate an offset with a base station in the changed serving cell.

Case D: Similarly, in step 710, if the first base station indicates the second offset to another base station (for example, the second base station), and the another base station uses the second offset when sending paging to the UE, when a serving cell of the UE in the first network changes, the UE also redetermines whether PO overlapping occurs.

In one case, if the UE determines, in the changed serving cell, that PO overlapping does not occur on a PO determined by adding a PO for monitoring paging and the value of the second offset indicated by the second offset indication information, the UE does not perform processing. That is, the UE continues to monitor paging on the PO for monitoring paging in the changed serving cell.

In another case, if the UE determines, in the changed serving cell, that PO overlapping occurs on a PO determined by adding the PO for monitoring paging and the value of the second offset indicated by the second offset indication information, the UE needs to coordinate an offset with a base station in the changed serving cell.

Therefore, in this embodiment, when determining that paging needs to be simultaneously received from two or more other networks, the UE may negotiate a PO with a network device in one of the networks, to avoid a paging loss on the PO.

### Embodiment 4

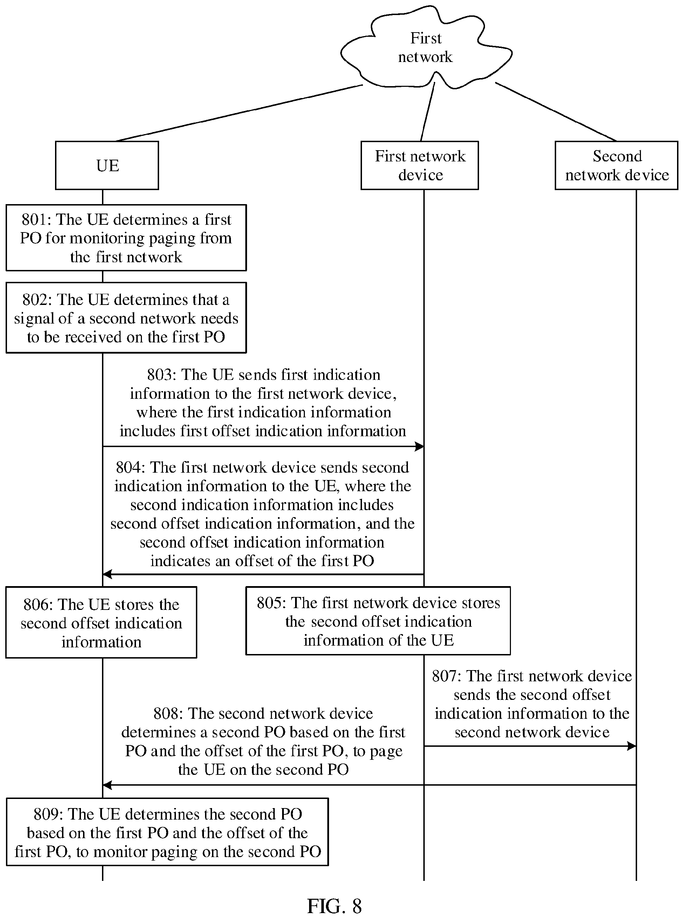

Embodiments of this application further provide a paging method. As shown in FIG. 8, the method includes the following steps.

801: UE determines a first PO for monitoring paging from a first network.

For implementation of step 801, refer to step 601.

802: The UE determines that a signal of a second network needs to be received on the first PO.

For implementation of step 802, refer to step 602.

803: The UE sends first indication information to a first network device. The first indication information includes first offset indication information.

It may be understood that, that the first indication information includes the first offset indication information means that the first indication information indicates that the first PO (needs to be) updated.

In this embodiment, the first network device may be an MME/AMF in the first network. In other words, the UE may directly indicate, to a core network, that the UE needs to update the first PO. In this case, although the first indication information is to be sent by the UE to the MME/AMF through a first base station in the first network, the first base station transparently transmits the first indication information, and the first base station does not perceive or process the first indication information.

In some embodiments, for implementation of the first indication information, refer to step 603.

In some embodiments, the UE may further indicate cell information to the MME/AMF. A cell indicated by the cell information may be a serving cell of the UE, or may be a cell accessed by the UE when the UE sends the first indication information to the first network device. The cell information may be a cell ID.

804: The first network device sends second indication information to the UE. The second indication information includes second offset indication information, and the second offset indication information indicates an offset of the first PO.

805: The first network device stores the second offset indication information of the UE.

In some embodiments, the first network device may establish a correspondence between a first UE ID and the second offset indication information of the UE, and the correspondence may further correspond to the cell information of the UE.

806: The UE stores the second offset indication information.

807: The first network device sends the second offset indication information to a second network device.

In this embodiment, the first network device may be the MME/AMF, and the second network device may be the first base station. The first base station may be a base station accessed by the UE when the UE sends the first indication information to the MME/AMF.

In some embodiments, when paging the UE, the MME/AMF may indicate the second offset indication information in a paging message sent to the first base station. For example, the paging message may include a UE radio capability for paging IE, and the UE radio capability for paging IE indicates the second offset indication information.

In some embodiments, when the first base station determines that the UE is in inactive state (RRC_inactive) or connected state (RRC_connected), the first base station may store the second offset indication information.

In some embodiments, the MME/AMF may further indicate the cell information of the UE to the first base station. The first base station is a base station corresponding to a cell indicated by the cell information.

808: The second network device determines a second PO based on the first PO and the offset of the first PO, to page the UE on the second PO.

For implementation of this step, refer to step 607 or 710. Details are not described herein again.

809: The UE determines the second PO based on the first PO and the offset of the first PO, to monitor paging on the second PO.

For implementation of this step, refer to step 608 or 711. Details are not described herein again.

In addition, in this embodiment, one or more of the foregoing Case A, Case B, Case C, and Case D may exist, and details are not described herein again.

Therefore, in this embodiment, the UE may also negotiate a PO by notifying the first network device in the core network of PO overlapping, to avoid a paging loss.

### Embodiment 5

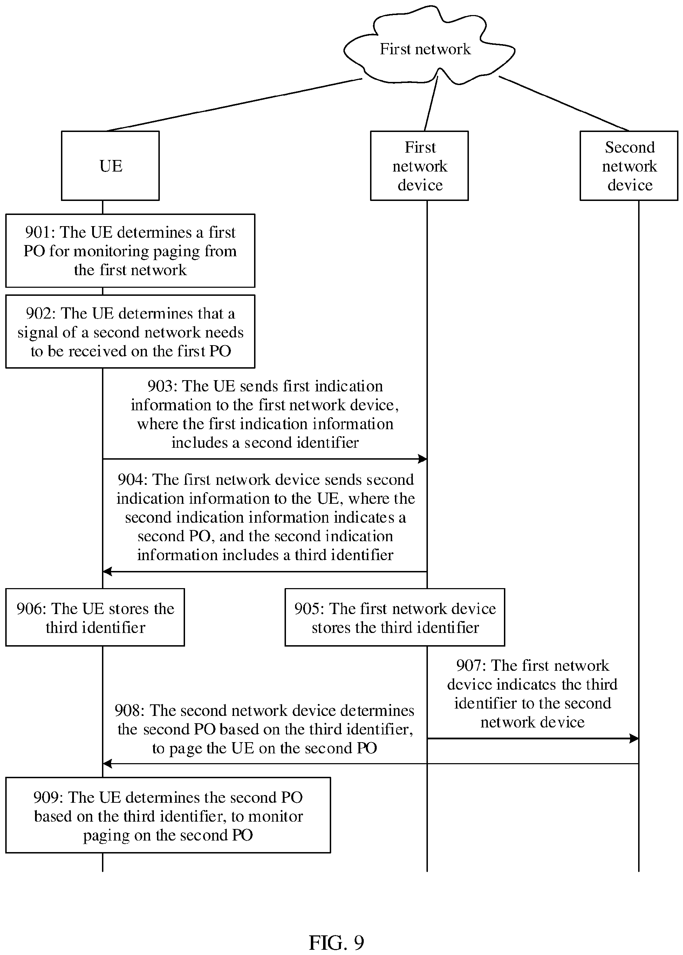

Embodiments of this application further provide a paging method. As shown in FIG. 9, the method includes the following steps.

901: UE determines a first PO for monitoring paging from a first network.

For implementation of step 901, refer to step 601.

902: The UE determines that a signal of a second network needs to be received on the first PO.

For implementation of step 902, refer to step 602.

903: The UE sends first indication information to a first network device. The first indication information includes a second identifier.

In some embodiments, the first indication information may indicate the second identifier.

It may be understood that, that the first indication information indicates the second identifier means that the first indication information indicates that the first PO (needs to be) updated.

In this embodiment, the first network device is an MME/AMF in the first network. In this embodiment, the second identifier is denoted as a second UE ID.

In some embodiments, the second UE ID may be one of an s-TMSI, a 5G-s-TMSI, or a UE_ID. The UE_ID may be determined based on the s-TMSI or the 5G-s-TMSI. For example, UE_ID=IMSI mod 1024, or UE_ID=5G-s-TMSI mod 1024.

In other words, the UE ID affects a location of a PO calculated by a base station or the UE. When the UE ID changes, the location of the PO also changes. Therefore, when the UE ID changes, PO overlapping can be avoided.

In some embodiments, when the UE determines to simultaneously receive paging messages on different networks, the UE may determine the second UE ID based on POs for simultaneously receiving the paging messages. The second UE ID may include one UE ID, or may include a plurality of UE IDs.

In some embodiments, the UE may further indicate cell information of the UE to the MME/AMF. A cell indicated by the cell information may be a serving cell of the UE, or may be a cell accessed when the UE sends the first indication information to the MME/AMF. The cell information may be a cell ID.

904: The first network device sends second indication information to the UE. The second indication information indicates a second PO, and the second indication information includes a third identifier.

Alternatively, the second indication information indicates the third identifier. In this embodiment, the third identifier is denoted as a third UE ID.

In some embodiments, the third identifier indicated by the MME/AMF to the UE may be different from or the same as the second identifier. If the third identifier is different from the second identifier because the MME/AMF further stores context information of another UE, and a resource scheduling status of the another UE needs to be considered. Therefore, a PO indicated by the second identifier may not be suitable for paging the UE, and the MME/AMF needs to determine the third identifier suitable for the UE based on a resource scheduling status of the MME/AMF.

905: The first network device stores the third identifier.

In some embodiments, the MME/AMF may further store the cell information of the UE.

906: The UE stores the third identifier.

907: The first network device indicates the third identifier to a second network device.

The second network device may be a first base station. The first base station is a base station in a cell in which the UE is located, and both the first base station and the first network device MME/AMF belong to the first network.

In some embodiments, when paging the UE, the MME/AMF may send a paging message to the first base station. The paging message includes the third UE ID, so that the first base station can determine, based on the third UE ID, the second PO for paging the UE.

In some embodiments, when the first base station determines that the UE is in inactive state (RRC_inactive) or connected state (RRC_connected), the first base station may further store the third UE ID.

In some embodiments, when the MME/AMF pages the UE, the paging message sent to the first base station may further include the cell information of the UE. That is, the first base station is a base station corresponding to a cell in which the UE is located.

In some embodiments, the first base station may be a base station accessed by the UE when the UE sends the first indication information to the MME/AMF.

908: The second network device determines the second PO based on the third identifier, to page the UE on the second PO.

For example, the first base station may determine, based on the third UE ID, the second PO for paging the UE, to page the UE on the second PO.

In some embodiments, a paging message used by the first base station to page the UE may be signaling that is sent by the first base station to the UE and that is used to schedule a paging message of the UE; or the paging message used by the first base station to page the UE may be a paging message of the UE that is sent by the first base station to the UE.

In some embodiments, the first base station may calculate, in a first cell, the second PO of the UE by using the third UE ID, and page the UE on the second PO. The first cell may be a cell accessed by the UE when the UE sends the first indication information to the MME/AMF.

In some embodiments, the first base station calculates, in a second cell, the second PO of the UE by using the second UE ID, and page the UE on the second PO. The second cell may be a cell corresponding to the first base station, and is not a cell accessed by the UE when the UE sends the first indication information to the MME/AMF.

In some embodiments, the second network device may further indicate the third UE ID to another network device located in a same network as the second network device.

For example, the first base station indicates the third UE ID to a second base station. In addition, the first base station may indicate the third UE ID to the second base station by using a paging message. The second base station may calculate a PO of the UE by using the third UE ID, and page the UE on the PO.

909: The UE determines the second PO based on the third identifier, to monitor paging on the second PO.

For example, the UE may calculate the second PO of the UE by using the third UE ID, and monitor paging on the second PO.

Monitoring paging may be monitoring signaling used to schedule a paging message of the UE, or monitoring paging may be monitoring a paging message of the UE.

In addition, in this embodiment, a case similar to Case A and Case B may also occur. That is, PO overlapping may occur when a serving cell of the UE in the first network or the second network changes. If PO overlapping occurs, the UE needs to coordinate a PO.

A case in Case E and Case F below may also exist.

Case E: In addition to sending paging to the first base station, the MME/AMF may further send paging to another base station. If the paging sent by the MME/AMF to the another base station includes the third UE ID, when a cell that the UE camps on in the first network changes, the UE needs to redetermine whether PO overlapping occurs.

(1) In the changed serving cell, if PO overlapping does not occur on a PO calculated by the UE based on the third UE ID, the UE continues to monitor paging on the PO corresponding to the third UE ID.

(2) In the changed serving cell, if PO overlapping occurs on the PO calculated by the UE based on the third UE ID, the UE may coordinate a UE ID. The coordination may be coordination with the MME/AMF in the first network, or may be coordination with an MME/AMF in the second network. The second network is a network on which a PO overlaps that on the first network and with which the UE has not negotiated.

Case F: If the first base station indicates the third UE ID to another base station (the second base station), and the another base station uses the second offset when sending paging to the UE, when a serving cell of the UE in the first network changes, the UE redetermines whether PO overlapping occurs.

(1) In the changed serving cell, if PO overlapping does not occur on a PO calculated by the UE based on the third UE ID, the UE continues to monitor paging on the PO corresponding to the third UE ID.

(2) In the changed serving cell, if PO overlapping occurs on the PO calculated by the UE based on the third UE ID, the UE coordinates a UE ID. The coordination may be coordination with the MME/AMF in the first network, or may be coordination with an MME/AMF in the second network. The second network is a network on which a PO overlaps with that on the first network.

Therefore, in this embodiment, the UE may also negotiate a PO by notifying the first network device in the core network of PO overlapping, to avoid a paging loss.

### Embodiment 6

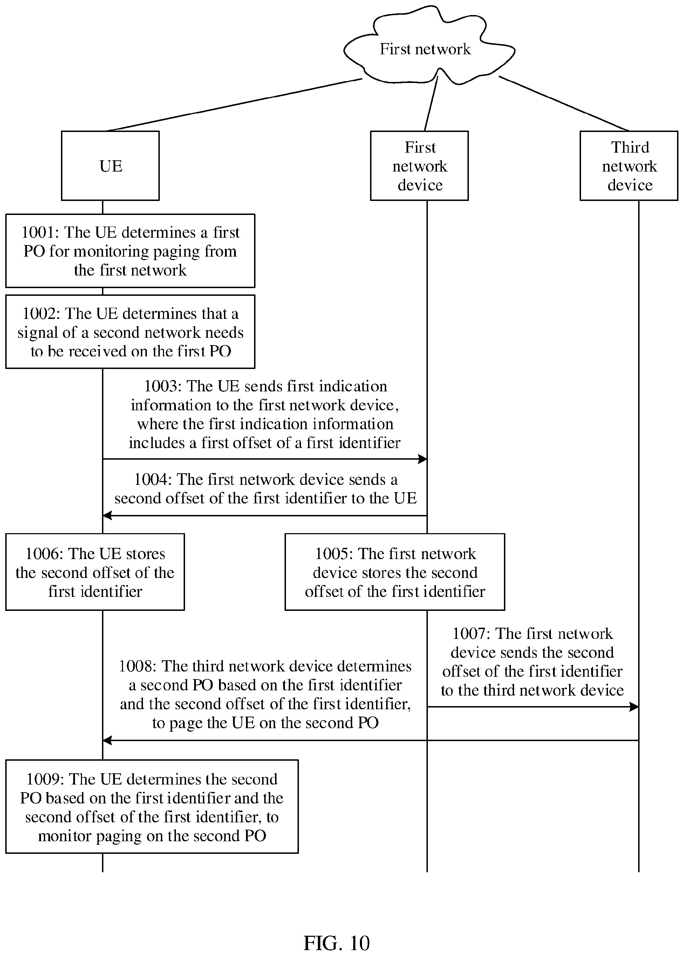

Embodiments of this application further provide a paging method. As shown in FIG. 10, the method includes the following steps.

1001: UE determines a first PO for monitoring paging from a first network.

For implementation of step 1001, refer to step 601.

1002: The UE determines that a signal of a second network needs to be received on the first PO.

For implementation of step 1002, refer to step 602.

1003: The UE sends first indication information to a first network device. The first indication information includes a first offset of a first identifier.

In this embodiment, the first network device may be an MME/AMF in the first network. The first identifier may be a first UE ID.

It may be understood that, that the first indication information includes the first offset of the first identifier means that the first indication information indicates that the first PO (needs to be) updated.

In some embodiments, when determining to negotiate a PO, the UE may determine an offset of the first UE ID based on the first UE ID corresponding to the first PO on which PO overlapping occurs. The offset of the first UE ID may be understood as an offset of the first PO.

In some embodiments, the first offset may be alternatively replaced with a first offset range. That is, the first indication information includes an offset range of the first UE ID.

The offset range of the first UE ID may be a range of offsets that prevent the UE from undergoing PO overlapping, or the offset range of the first UE ID may be a range of offsets that enable the UE to undergo PO overlapping.

In some embodiments, the UE may further indicate cell information of a cell to the MME/AMF. The cell may be a serving cell of the UE, or the cell may be a cell accessed when the UE sends the first indication information to the MME/AMF. The cell information may be a cell ID.

1004: The first network device sends a second offset of the first identifier to the UE.

In some embodiments, the second offset indicated by the MME/AMF to the UE may be different from or the same as the first offset. If the second offset is different from the first offset because the MME/AMF further stores context information of another UE, and a resource scheduling status of the another UE needs to be considered. Therefore, a PO indicated by the first offset of the first identifier may not be suitable for paging the UE, and the MME/AMF needs to determine the second offset suitable for the first identifier of the UE based on a resource scheduling status of the MME/AMF. That is, a PO location corresponding to the second offset of the first identifier is different from a PO location corresponding to the first offset of the first identifier.

1005: The first network device stores the second offset of the first identifier.

In some embodiments, the MME/AMF may further store the cell information of the UE. In this embodiment, the second offset of the second identifier is denoted as a second offset of the first UE ID.

1006: The UE stores the second offset of the first identifier.

1007: The first network device sends the second offset of the first identifier to a third network device.

In this embodiment, the first network device is the MME/AMF, and the third network device may be a first base station in a same network as the first network device.

In some embodiments, the first base station may be a base station corresponding to a cell in which the UE is located, and the MME/AMF may further indicate information about the cell in which the UE is located to the first base station.

In some embodiments, the first base station may be a base station accessed by the UE when the UE sends the first indication information to the MME/AMF.

In some embodiments, when the first base station determines that the UE is in inactive state (RRC_inactive) or connected state (RRC_connected), the first base station may further store the second offset of the first UE ID.

1008: The third network device determines a second PO based on the first identifier and the second offset of the first identifier, to page the UE on the second PO.

For example, the third network device is the first base station. The first base station may calculate the second PO of the UE based on the first UE ID and the second offset of the first UE ID, and page the UE on the second PO. Paging the UE may mean that the first base station sends, to the UE, signaling used to schedule a paging message of the UE; or paging the UE may mean that the first base station sends a paging message of the UE to the UE.

In some embodiments, the first base station may calculate the second PO of the UE based on the first UE ID and the second offset of the first UE ID in a first cell, and page the UE on the second PO. The first cell is a cell accessed by the UE when the UE sends the first indication information to the MME/AMF.

In some embodiments, the first base station may calculate, in a second cell, a PO of the UE by using the first UE ID, and page the UE on the PO. The second cell is a cell corresponding to the first base station, and is not a cell accessed by the UE when the UE sends the first indication information to the MME/AMF.

In some embodiments, the first base station may further indicate the second offset of the first UE ID to a second base station. The second base station is a base station that is in a same network as the first base station.

For example, the first base station may send a paging message to the second base station. The paging message indicates to page the UE. The paging message indicates the second offset of the first UE ID. In this way, the second base station may calculate a PO of the UE based on the first UE ID and the second offset of the first UE ID, and page the UE on the PO.

1009: The UE determines the second PO based on the first identifier and the second offset of the first identifier, to monitor paging on the second PO.

For example, the UE may calculate the second PO of the UE based on the first UE ID and the second offset of the first UE ID, and monitor paging on the second PO. Monitoring paging may be monitoring signaling used to schedule a paging message of the UE, or monitoring paging may be monitoring a paging message of the UE.

In addition, in this embodiment, a case similar to Case A and Case B may also occur. That is, PO overlapping may occur when a serving cell of the UE in the first network or the second network changes. If PO overlapping occurs, the UE needs to coordinate a PO.

A case in Case G and Case H below may also exist.

Case G: In addition to sending paging to the first base station, the MME/AMF may further send paging to another base station. If the paging sent by the MME/AMF to the another base station includes the second offset of the first identifier, when a serving cell of the UE in the first network changes, the UE needs to redetermine whether PO overlapping occurs.
(1) In the changed serving cell, if PO overlapping does not occur on a PO calculated by the UE based on the second offset of the first identifier, the UE continues to monitor paging on the PO corresponding to the second offset of the first identifier.
(2) In the changed serving cell, if PO overlapping occurs on the PO calculated by the UE based on the second offset of the first identifier, the UE may coordinate a UE ID. The coordination may be coordination with the MME/AMF in the first network, or may be coordination with an MME/AMF in the second network. The second network is a network on which a PO overlaps with that on the first network.

Case H: If the first base station indicates the second offset of the first identifier to another base station (the second base station), and the another base station uses the second offset when sending paging to the UE, when a serving cell of the UE in the first network changes, the UE redetermines whether PO overlapping occurs.
(1) In the changed serving cell, if PO overlapping does not occur on a PO calculated by the UE based on the second offset of the first identifier, the UE continues to monitor paging on the PO corresponding to the second offset of the first identifier.
(2) In the changed serving cell, if PO overlapping occurs on the PO calculated by the UE based on the second offset of the first identifier, the UE coordinates a UE ID. The coordination may be coordination with the MME/AMF in the first network, or may be coordination with an MME/AMF in the second network. The second network is a network on which a PO overlaps with that on the first network.

Therefore, in this embodiment, the UE may also negotiate a PO by notifying the first network device in the core network of PO overlapping, to avoid a paging loss.

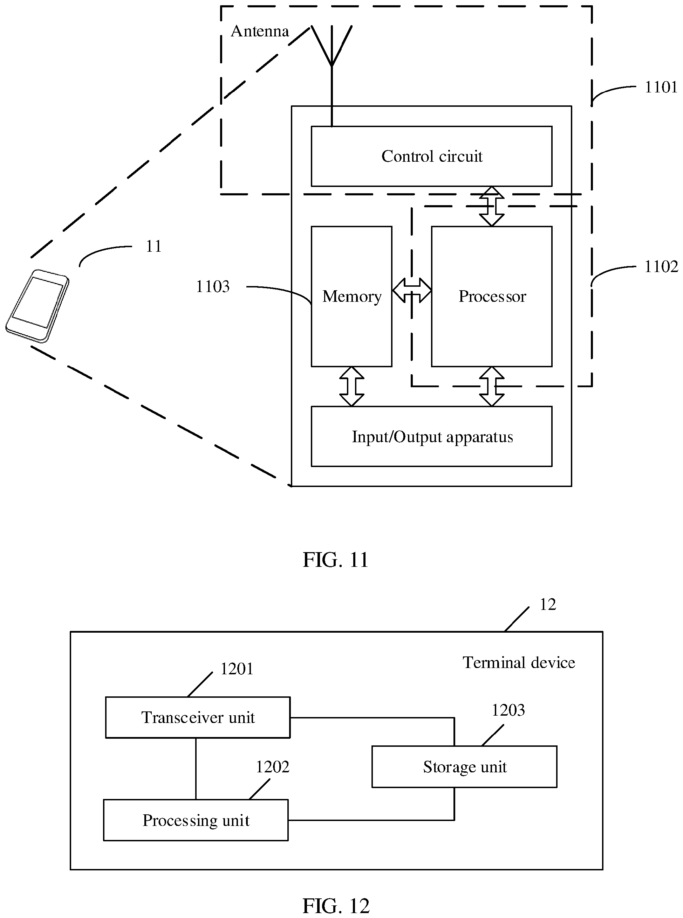

The foregoing describes in detail the communication methods in embodiments of this application with reference to FIG. 4, FIG. 6, FIG. 7A and FIG. 7B, FIG. 8, FIG. 9, and FIG. 10. With reference to FIG. 11 to FIG. 15, the following describes in detail communications apparatuses in embodiments of this application, for example, a terminal device, an apparatus (for example, a processor, a circuit, or a chip) used in a terminal device, a network device, or an apparatus (for example, a processor, a circuit, or a chip) used in a network device.

FIG. 11 is a schematic diagram of a structure of a terminal device according to an embodiment of this application. The terminal device may be the UE in the foregoing embodiments. The terminal device may be used in the system shown in FIG. 2 or FIG. 3, and performs functions of the terminal device in the foregoing method embodiments. For ease of description, FIG. 11 shows only main components of the terminal device. As shown in FIG. 11, a terminal device 11 includes a processor 1102, a memory 1103, a control circuit 1101, an antenna, and an input/output apparatus. The processor 1103 is mainly configured to process a communication protocol and communication data, control the entire terminal device, execute a software program, and process data of the software program, for example, configured to support the terminal device in performing actions described in the foregoing method embodiments. The memory 1103 is mainly configured to store the software program and the data. The control circuit is mainly configured to perform conversion between a baseband signal and a radio frequency signal, and process the radio frequency signal. A combination of the control circuit and the antenna may also be referred to as a transceiver, and is mainly configured to transmit and receive a radio frequency signal in a form of an electromagnetic wave. The input/output apparatus, such as a touchscreen, a display, or a keyboard, is mainly configured to receive data input by a user, and output data to the user.

After the terminal device is powered on, the processor 1103 may read the software program in the memory 1103, explain and execute instructions of the software program, and process the data of the software program. When data needs to be sent in a wireless manner, after performing baseband processing on the to-be-sent data, the processor outputs a baseband signal to a radio frequency circuit. After performing radio frequency processing on the baseband signal, the radio frequency circuit sends a radio frequency signal in a form of an electromagnetic wave through the antenna. When data is sent to the terminal device, the radio frequency circuit receives a radio frequency signal through the antenna, converts the radio frequency signal into a baseband signal, and outputs the baseband signal to the processor 1102. The processor 1102 converts the baseband signal into data, and processes the data.

A person skilled in the art may understand that for ease of description, FIG. 11 shows only one memory and one processor. In an actual terminal device, there may be a plurality of processors and a plurality of memories. The memory may also be referred to as a storage medium, a storage device, or the like. The memory may be a storage element located on a same chip as the processor, namely, an on-chip storage element, or an independent storage element. This is not limited in embodiments of this application.

In an optional implementation, the terminal device may include a baseband processor and a central processing unit. The baseband processor is mainly configured to process the communication protocol and the communication data. The central processing unit is mainly configured to control the entire terminal device, execute the software program, and process the data of the software program. Functions of the baseband processor and the central processing unit may be integrated into the processor in FIG. 11. A person skilled in the art may understand that the baseband processor and the central processing unit each may be an independent processor, and are interconnected by using a technology such as a bus. A person skilled in the art may understand that the terminal device may include a plurality of baseband processors to adapt to different network standards, the terminal device may include a plurality of central processing units to enhance a processing capability of the terminal device, and all components of the terminal device may be connected to each other through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program. The processor executes the software program to implement a baseband processing function.

In embodiments of this application, the antenna and the control circuit that have receiving and sending functions may be considered as a transceiver unit 1201 of a terminal device 12, for example, to support the terminal device in performing a receiving function and a sending function. The processor 1102 that has a processing function is considered as a processing unit 1202 of the terminal device 12. The memory 1103 that has a storage function is considered as a storage unit 1203 of the terminal device 12. As shown in FIG. 12, the terminal device 12 includes the transceiver unit 1201, the processing unit 1202, and the storage unit 1203. The transceiver unit may also be referred to as a transceiver, a transceiver machine, a transceiver apparatus, or the like. Optionally, a component configured to implement the receiving function in the transceiver unit 1201 may be considered as a receiving unit, and a component configured to implement the sending function in the transceiver unit 1201 may be considered as a sending unit. In other words, the transceiver unit 1201 includes the receiving unit and the sending unit. The receiving unit may also be referred to as a receiver, an input port, a receiver circuit, or the like. The sending unit may be referred to as a transmitter, a transmitter machine, a transmitter circuit, or the like.

The processor 1102 may be configured to execute instructions stored in the memory 1103 to control the transceiver unit 501 to receive a signal and/or send a signal, to complete the functions of the terminal device in the foregoing method embodiments. The processor 1102 further includes an interface, configured to implement a signal input/output function. In an implementation, it may be considered that a function of the transceiver unit 1201 is implemented by using a transceiver circuit or a transceiver-dedicated chip.

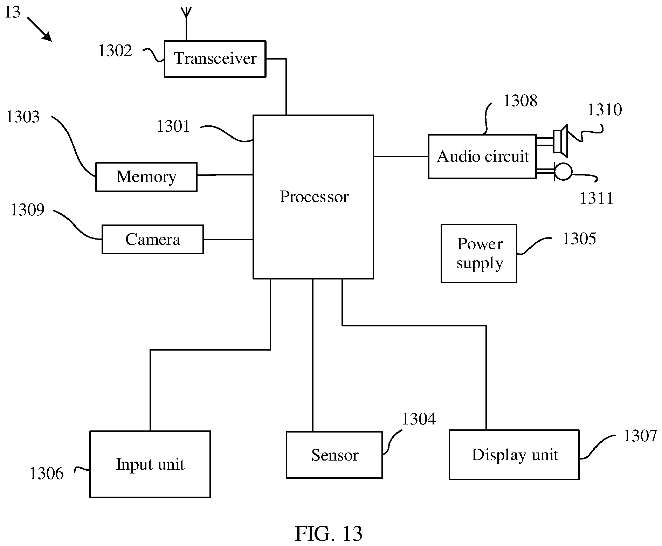

FIG. 13 is another schematic diagram of a structure of a terminal device according to an embodiment of this application. As shown in FIG. 13, the terminal device 13 includes a processor 1301 and a transceiver 1302. Optionally, the terminal device 13 further includes a memory 1303. The processor 1301, the transceiver 1302, and the memory 1303 communicate with each other through an internal connection path, to transfer a control signal and/or a data signal. The memory 1303 is configured to store a computer program. The processor 1301 is configured to invoke the computer program from the memory 1303 and run the computer program, to control the transceiver 1302 to receive/send a signal. The terminal device 13 may further include an antenna, configured to send, by using a radio signal, uplink data or uplink control signaling output by the transceiver 1302.

The processor 1301 and the memory 1303 may be integrated into one processing apparatus. The processor 1301 is configured to execute program code stored in the memory 1303, to implement the foregoing functions. During specific implementation, the memory 1303 may also be integrated into the processor 1301, or may be independent of the processor 1301.

Specifically, the terminal device 13 may correspond to embodiments of the methods according to embodiments of this application. In addition, units in the terminal device 13 and the foregoing other operations and/or functions are used to implement corresponding procedures in embodiments of the methods.

The processor 1301 may be configured to perform actions implemented by one or more of the terminal device or the UE described in the foregoing method embodiments, and the transceiver 1302 may be configured to perform sending or receiving actions of one or more of the terminal device or the UE described in the foregoing method embodiments. For details, refer to the descriptions in the foregoing method embodiments. Details are not described herein again.

Optionally, the terminal device 13 may further include a power supply 1305, configured to supply power to various components or circuits in the terminal device.

In addition, to make functions of the terminal device more perfect, the terminal device 13 may further include one or more of an input unit 1306, a display unit 1307, an audio circuit 1308, a camera 1309, a sensor 1304, and the like, and the audio circuit may further include a speaker 1310, a microphone 1311, and the like.

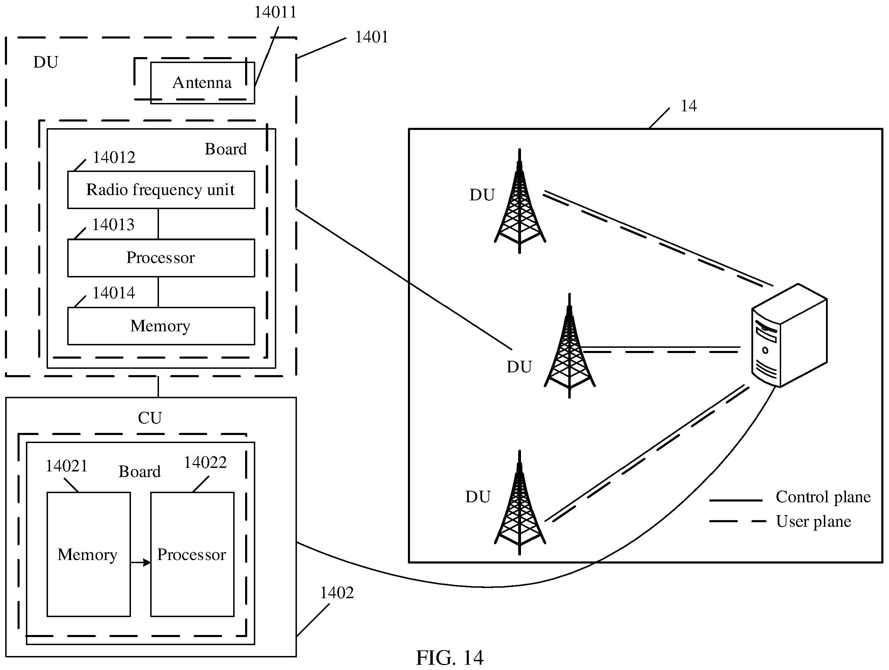

FIG. 14 is a schematic diagram of a structure of a network device according to an embodiment of this application. For example, FIG. 14 may be a schematic diagram of a structure of a first network device, a second network device, and a third network device. The first network device may be an access network device or a core network device, the second network device may be an access network device or a core network device, and the third network device may be an access network device or a core network device. Specific network devices represented by the first network device, the second network device, or the third network device are different in embodiments. The access network device may include a base station, and the core network device may include an MME/AMF. As shown in FIG. 14, the base station may be used in the system shown in one or more of FIG. 2 and FIG. 3, to perform the functions of the network device in the foregoing method embodiments. The base station 14 may include one or more DUs 1401 and one or more CUs 1402. The CU 1402 may communicate with an NG core (next generation core, NC). The DU 1401 may include at least one radio frequency unit 14012, at least one processor 14013, and at least one memory 14014. The DU 1401 may further include at least one antenna 14011. The DU 1401 is mainly configured to receive and send a radio frequency signal, convert a radio frequency signal and a baseband signal, and perform some baseband processing. The CU 1402 may include at least one processor 14022 and at least one memory 14021. The CU 1402 and the DU 1401 may communicate with each other through an interface. A control plane (Control plane) interface may be Fs-C, for example, F1-C. A user plane (User Plane) interface may be Fs-U, for example, F1-U.

The CU 1402 is mainly configured to perform baseband processing, control the base station, and the like. The DU 1401 and the CU 1402 may be physically disposed together, or may be physically disposed separately. To be specific, the base station is a distributed base station. The CU 1402 is a control center of the base station, may also be referred to as a processing unit, and is mainly configured to complete a baseband processing function. For example, the CU 1402 may be configured to control the base station to perform an operation procedure related to the network device in the foregoing method embodiments.

Specifically, baseband processing on the CU and the DU may be divided based on protocol layers of a wireless network. For example, functions of a packet data convergence protocol (packet data convergence protocol, PDCP) layer and a protocol layer above the PDCP layer are set in the CU. Functions of protocol layers below the PDCP, such as a radio link control (radio link control, RLC) layer and a media access control (media access control, MAC) layer, are set in the DU. For another example, the CU implements functions of a radio resource control (radio resource control, RRC) layer and a packet data convergence protocol (packet data convergence protocol, PDCP) layer. The DU implements functions of a radio link control (radio link control, RLC) layer, a medium access control (medium access control, MAC) layer, and a physical (physical, PHY) layer.

In addition, optionally (not shown in the figure), the base station 14 may include one or more antennas, one or more radio frequency units, one or more DUs, and one or more CUs. The DU may include at least one processor and at least one memory, the at least one antenna and the at least one radio frequency unit may be integrated into one antenna apparatus, and the CU may include at least one processor and at least one memory.

In an instance, the CU 1402 may include one or more boards, and a plurality of boards may jointly support a radio access network (for example, a 5G network) of a single access standard, or may separately support radio access networks (such as an LTE network, a 5G network, or another network) of different access standards. The memory 14021 and the processor 14022 may serve one or more boards. That is, the memory and the processor may be disposed individually on each board. Alternatively, the plurality of boards may share a same memory and processor. In addition, a necessary circuit may be further disposed on each board. The DU 1401 may include one or more boards, and a plurality of boards may jointly support a radio access network (for example, a 5G network) of a single access standard, or may separately support radio access networks (such as an LTE network, a 5G network, or another network) of different access standards. The memory 14014 and the processor 14013 may serve one or more boards. That is, the memory and the processor may be disposed individually on each board. Alternatively, the plurality of boards may share a same memory and processor. In addition, a necessary circuit may be further disposed on each board.

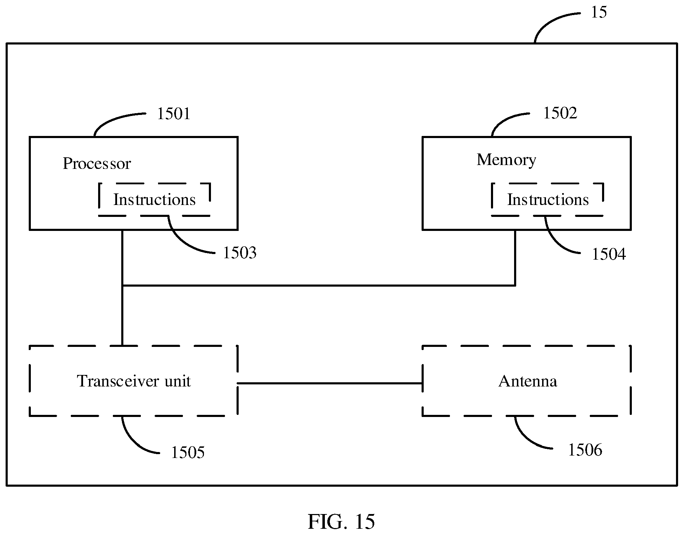

FIG. 15 is a schematic diagram of a structure of a communications apparatus 15. The communications apparatus 15 may be configured to implement the methods described in the foregoing method embodiments. For details, refer to the descriptions in the foregoing method embodiments. The communications apparatus 15 may be a chip, a network device (for example, a base station, an MME, or an AMF), or a terminal device.

The communications apparatus 15 includes one or more processors 1501. The processor 1501 may be a general-purpose processor, a dedicated processor, or the like. For example, the processor 1501 may be a baseband processor or a central processing unit. The baseband processor may be configured to process a communication protocol and communication data. The central processing unit may be configured to: control the apparatus (for example, a base station, a terminal, or a chip), execute a software program, and process data of the software program. The apparatus may include a transceiver unit configured to input (receive) and output (send) a signal. For example, the apparatus may be a chip, and the transceiver unit may be an input and/or output circuit or a communications interface of the chip. The chip may be used for the terminal device or the network device (for example, the base station). For another example, the apparatus may be the terminal device or the network device (for example, the base station), and the transceiver unit may be a transceiver, a radio frequency chip, or the like.

The communications apparatus 15 includes one or more processors 1501. The one or more processors 1501 may implement the methods performed by the network device or the UE in the embodiments shown in FIG. 4, FIG. 6, FIG. 7A and FIG. 7B, FIG. 8, FIG. 9, and FIG. 10.

In a possible design, the communications apparatus 15 includes a means (means) configured to receive scheduling information from a network device, and a means (means) configured to send sidelink data based on the scheduling information. For example, the scheduling information may be received or the sidelink data may be sent through a transceiver, an input/output circuit, or an interface of the chip. For the scheduling information, refer to related descriptions in the foregoing method embodiments.

In a possible design, the communications apparatus 15 includes a means (means) configured to determine scheduling information of the terminal device, and a means (means) configured to send the scheduling information to the terminal device. For details, refer to related descriptions in the foregoing method embodiments. For example, the scheduling information may be sent through a transceiver, an input/output circuit, or an interface of the chip, and the scheduling information of the terminal device may be determined by using one or more processors.

In a possible design, the communications apparatus 15 includes a means (means) configured to receive scheduling information from a first terminal device, and a means (means) configured to receive sidelink data based on the scheduling information. For details, refer to related descriptions in the foregoing method embodiments. For example, the scheduling information and the sidelink data may be received through a transceiver, an input/output circuit, or an interface of the chip.

Optionally, in addition to implementing the method in one or more of the embodiments in FIG. 4, FIG. 6, FIG. 7A and FIG. 7B, FIG. 8, FIG. 9, and FIG. 10, the processor 1501 may further implement another function.

Optionally, in a design, the processor 1501 may further include instructions 1503. The instructions may be run on the processor, so that the communications apparatus 15 performs the methods described in the foregoing method embodiments.

In another possible design, the communications apparatus 15 may further include a circuit, and the circuit may implement the functions of the network device or the terminal device in the foregoing method embodiments.

In still another possible design, the communications apparatus 15 may include one or more memories 1502 that store instructions 1504. The instructions may be run on the processor, so that the communications apparatus 15 performs the method described in the foregoing method embodiments. Optionally, the memory may further store data. Optionally, the processor may also store instructions and/or data. For example, the one or more memories 1502 may store the mobile valid area described in the foregoing embodiments, or the related parameter, the table, or the like in the foregoing embodiments. The processor and the memory may be separately disposed, or may be integrated together.

In yet another possible design, the communications apparatus 15 may further include a transceiver unit 1505 and an antenna 1506, or include a communications interface. The transceiver unit 1505 may be referred to as a transceiver machine, a transceiver circuit, a transceiver, or the like, and is configured to implement a transceiver function of the apparatus by using the antenna 1506. The communications interface (not shown in the figure) may be used for communication between a core network device and the network device, or communication between network devices. Optionally, the communications interface may be a wired communications interface, for example, an optical fiber communications interface.

The processor 1501 may be referred to as a processing unit, to control an apparatus (for example, the terminal or the base station).

In addition, because sending or receiving performed by the transceiver unit 1505 described in this embodiment of this application is under control of the processing unit (the processor 1501), a sending or receiving action may also be described as being performed by the processing unit (the processor 1501) in this embodiment of this application. This does not affect understanding of the solution by a person skilled in the art.

The terminal device and the network device in the foregoing apparatus embodiments may exactly correspond to the terminal device or the network device in the method embodiments, and a corresponding module or unit performs a corresponding step. For example, when the apparatus is implemented in a form of a chip, the receiving unit may be an interface circuit that is of the chip and that is configured to receive a signal from another chip or apparatus. The foregoing sending unit is an interface circuit of the apparatus, and is configured to send a signal to another apparatus. For example, when the apparatus is implemented by a chip, the sending unit is an interface circuit that is of the chip and that is configured to send a signal to another chip or apparatus.

It should be understood that, in embodiments of this application, the processor may be a CPU, or may be another general-purpose processor, a DSP, an ASIC, an FPGA, or another programmable logic device, a discrete gate or transistor logic device, a discrete hardware component, or the like.

It may be further understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example but not limitative description, many forms of random access memories (random access memory, RAM) can be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The terminal device and the network device in the foregoing apparatus embodiments may exactly correspond to the terminal device or the network device in the method embodiments, and a corresponding module or unit performs a corresponding step. For example, when the apparatus is implemented in a form of a chip, the receiving unit may be an interface circuit that is of the chip and that is configured to receive a signal from another chip or apparatus. The foregoing sending unit is an interface circuit of the apparatus, and is configured to send a signal to another apparatus. For example, when the apparatus is implemented by a chip, the sending unit is an interface circuit that is of the chip and that is configured to send a signal to another chip or apparatus.

Embodiments of this application further provide a communications system. The communications system includes the terminal device, the first network device, and the second network device, or the terminal device, the first network device, and the third network device.

Embodiments of this application further provide a computer-readable medium, configured to store computer program code. The computer program includes instructions used to perform the method performed by the terminal device, the first network device, or the second network device in the communication methods shown in FIG. 4 to FIG. 10. The readable storage may a ROM or a RAM. This is not limited in embodiments of this application.

This application further provides a computer program product. The computer program product includes instructions. When the instructions are executed, the terminal device, the first network device, the second network device, and the third network device are enabled to respectively perform operations corresponding to the UE, the first network device, the second network device, and the third network device in the foregoing methods.

Embodiments of this application further provide a system chip. The system chip includes a processing unit and a communications unit. The processing unit may be, for example, a processor, and the communications unit may be, for example, an input/output interface, a pin, or a circuit. The processing unit may execute computer instructions, so that a communications apparatus to which the chip is applied performs the operations of the terminal device, the first network device, the second network device, and the third network device in the communications methods shown in FIG. 4 to FIG. 10 provided in embodiments of this application.

Optionally, any communications apparatus provided in embodiments of this application may include the system chip.

Optionally, the computer instructions are stored in a storage unit.

Optionally, the storage unit is a storage unit in the chip, for example, a register or a cache. Alternatively, the storage unit may be a storage unit that is in the communications apparatus and that is located outside the chip, for example, a ROM, another type of static storage device that can store static information and instructions, or a RAM. The processor described above may be a CPU, a microprocessor, an ASIC, or one or more integrated circuits configured to control execution of a program for the feedback information transmission method. The processing unit and the storage unit may be decoupled, are separately disposed on different physical devices, and are connected in a wired or wireless manner to implement functions of the processing unit and the storage unit, to support the system chip in implementing various functions in the foregoing embodiments. Alternatively, the processing unit and the memory may be coupled to a same device. It should be understood that, the processor in embodiments of this application may be a central processing unit (Central Processing Unit, CPU), or may be another general purpose processor, a digital signal processor (digital signal processor, DSP), an application specific integrated circuit (application specific integrated circuit, ASIC), a field programmable gate array (field programmable gate array, FPGA), or another programmable logic device, discrete gate or transistor logic device, discrete hardware component, or the like. The general purpose processor may be a microprocessor, or the processor may be any conventional processor or the like.

A person skilled in the art may clearly understand that, for the purpose of convenient and brief descriptions, for detailed working processes of the foregoing systems, apparatuses, and units, refer to corresponding processes in the foregoing method embodiments. Details are not described herein again.

All or some of the foregoing embodiments may be implemented by using software, hardware (for example, a circuit), firmware, or any combination thereof. When the software is used for implementation, all or some of the foregoing embodiments may be implemented in a form of a computer program product. The computer program product includes one or more computer instructions or computer programs. When the program instructions or the computer programs are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

Names may be assigned to various objects that may appear in this application, for example, various messages/information/devices/network devices/systems/apparatuses/actions/operations/procedures/concepts. It may be understood that these specific names do not constitute a limitation on the related objects, and the assigned names may change with a factor such as a scenario, a context, or a use habit. Technical meanings of technical terms in this application should be understood and determined mainly based on functions and technical effects that are of the technical terms and that are reflected/performed in the technical solutions.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually represents an "or" relationship between the associated objects, or may represent an "and/or" relationship. A specific meaning depends on a context.

In this application, "at least one" means one or more, and "a plurality of' means two or more. The term "at least one (piece) of the following" or a similar expression thereof means any combination of these items, including any combination of one (piece) or a plurality (pieces). For example, at least one (piece) of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, but should not be construed as any limitation on the implementation processes in embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments provided in this application, it should be understood that the disclosed system, communications apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected depending on actual requirements to achieve the objectives of the solutions in the embodiments.

In addition, function units in embodiments of this application may be integrated into one processing unit, or each of the units may exist alone physically, or two or more units are integrated into one unit.

When the functions are implemented in a form of a software function unit and sold or used as an independent product, the functions may be stored in a computer readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A paging method, comprising:
sending, by a terminal device, first indication information to a first network device in a first network, wherein the first indication information indicates that a first paging occasion PO needs to be updated; and
receiving, by the terminal device, second indication information from the first network device, wherein the second indication information is used by the terminal device to determine a second PO.

2. The method according to claim 1, wherein the method further comprises: determining, by the terminal device, the second PO based on the second indication information; and
monitoring, by the terminal device, a paging message from the first network device on the second PO.

3. The method according to claim 2, wherein before the receiving, by the terminal device, second indication information from the first network device, the method further comprises:
sending, by the terminal device, a first identifier of the terminal device to the first network device.

4. The method according to claim 3, wherein the first identifier comprises at least one of the following:
an s-TMSI, an IMSI, a 5G-GUTI, or a 5G-s-TMSI.

5. The method according to claim 3 or 4, wherein the second indication information comprises second offset indication information.

6. The method according to claim 5, wherein the second offset indication information indicates an offset of the first PO; and
the determining, by the terminal device, the second PO based on the second indication information comprises:
determining, by the terminal device, the second PO based on the first PO and the offset of the first PO.

7. The method according to claim 1, wherein the first indication information comprises first offset indication information or first offset range indication information.

8. The method according to any one of claims 2 to 4, wherein
the second indication information comprises a third identifier, or the second indication information indicates the third identifier; and
the determining, by the terminal device, the second PO based on the second indication information comprises:
determining, by the terminal device, the second PO based on the third identifier.

9. The method according to claim 8, wherein the first indication information comprises a second identifier, or the first indication information indicates the second identifier.

10. The method according to claim 5, wherein the second offset indication information indicates an offset of the first identifier; and
the determining, by the terminal device, the second PO based on the second indication information comprises:
determining, by the terminal device, the second PO based on the first identifier and the offset of the first identifier.

11. The method according to claim 1, wherein the method further comprises:
when the terminal device determines that a serving cell of the terminal device in the first network changes, determining, by the terminal device, a third PO based on the second indication information; and
if the terminal device needs to receive a signal on a second network on the third PO, sending, by the terminal device, third indication information to a second network device in the first network or a network device in the second network, wherein the third indication information indicates that the third PO needs to be updated.

12. A paging method, wherein the method comprises:
receiving, by a first network device, first indication information from a terminal device, wherein the first indication information indicates that a first paging occasion PO needs to be updated; and
sending, by the first network device, second indication information to the terminal device, wherein the second indication information is used by the terminal device to determine a second PO.

13. The method according to claim 12, wherein the method further comprises:
sending, by the first network device, a paging message to the terminal device on the second PO.

14. The method according to claim 13, wherein before the sending, by the first network device, second indication information to the terminal device, the method further comprises:
receiving, by the first network device, a first identifier from the terminal device.

15. The method according to claim 14, wherein the first identifier comprises at least one of the following:
an s-TMSI, an IMSI, a 5G-GUTI, or a 5G-s-TMSI.

16. The method according to claim 14 or 15, wherein the second indication information comprises second offset indication information.

17. The method according to claim 16, wherein the second offset indication information indicates an offset of the first PO; and
the sending, by the first network device, a paging message to the terminal device on the second PO comprises:
determining, by the first network device, the second PO based on the first PO and the offset of the first PO, to send the paging message to the terminal device on the second PO.

18. The method according to claim 12, wherein the first indication information comprises first offset indication information or first offset range indication information.

19. The method according to any one of claims 13 to 15, wherein the second indication information comprises a third identifier, or the second indication information indicates the third identifier.

20. The method according to claim 19, wherein the first indication information comprises a second identifier, or the first indication information indicates the second identifier.

21. The method according to claim 16, wherein the second offset indication information indicates an offset of the first identifier.

22. The method according to claim 16, wherein the method further comprises:
sending, by the first network device, the second offset indication information to a second network device, wherein the second offset indication information indicates the second network device to send a paging message to the terminal device based on the second offset indication information, and the first network device and the second network device are access network devices in a same network.

23. The method according to claim 16, wherein the method further comprises:
sending, by the first network device, at least one of the second offset indication information, the first identifier, and cell information of the terminal device to a third network device, wherein the first network device is an access network device, the third network device is a core network device, and the first network device and the third network device belong to a same network.

24. A communications apparatus, configured to perform the method according to any one of claims 1 to 11.

25. A communications apparatus, configured to perform the method according to any one of claims 12 to 23.

26. A communications apparatus, comprising a processor, wherein the processor is coupled to a memory;
the memory is configured to store a computer program or instructions; and
the processor is configured to execute the computer program or the instructions stored in the memory, so that the apparatus performs the method according to any one of claims 1 to 11.

27. A communications apparatus, comprising a processor, wherein the processor is coupled to a memory;
the memory is configured to store a computer program or instructions; and
the processor is configured to execute the computer program or the instructions stored in the memory, so that the apparatus performs the method according to any one of claims 12 to 23.

28. A readable storage medium, comprising a program or instructions, wherein when the program or the instructions are run by a processor, the method according to any one of claims 1 to 11 is performed.

29. A readable storage medium, comprising a program or instructions, wherein when the program or the instructions are run by a processor, the method according to any one of claims 12 to 23 is performed.

30. A communications system, comprising the apparatus according to claim 26 and the apparatus according to claim 27.

31. A communications apparatus, comprising:
a sending unit, configured to send first indication information to a first network device in a first network, wherein the first indication information indicates that a first paging occasion PO needs to be updated; and
a receiving unit, configured to receive second indication information from the first network device, wherein the second indication information is used by a terminal device to determine a second PO.

32. A communications apparatus, comprising:
a receiving unit, configured to receive first indication information from a terminal device, wherein the first indication information indicates that a first paging occasion PO needs to be updated; and
a sending unit, configured to send second indication information to the terminal device, wherein the second indication information is used by the terminal device to determine a second PO.

33. A communications system, comprising the communications apparatus according to claim 31 and the communications apparatus according to claim 32.
